# EUROPEAN PATENT APPLICATION

(11) **EP 4 836 535 A1**
(43) Date of publication of application: **04.11.2026**
(21) Application number: 23962933.0
(22) Date of filing: 29.12.2023
(51) Int. Cl.: H04W 52/02

(54) **SYSTEM INFORMATION BLOCK (SIB) REQUEST METHOD, COMMUNICATION DEVICE, AND STORAGE MEDIUM**

(71) Applicant: Beijing Xiaomi Mobile Software Co., Ltd., Beijing 100085 (CN)
(72) Inventor: ZHAO, Li, Beijing 100085 (CN)
(74) Representative: Stöckeler, Ferdinand
(86) International application number: PCT/CN2023/143628
(87) International publication number: WO 2025/138259

(57) **Abstract**

Embodiments of the present disclosure provide a system information block (SIB) request method, a communication device, and a storage medium. The SIB request method comprises: on the basis of whether a first cell periodically sends an SIB, determining a mode for acquiring the SIB of the first cell.

## Description

### TECHNICAL FIELD

The disclosure relates to the field of communication technology, and in particular to a method for requesting a system information block (SIB), a communication device, and a storage medium.

### BACKGROUND

Network energy saving (NES) technology is proposed to reduce energy consumption of base stations and the network side. The NES technology limits transceiving operations of network devices in a time domain and extends a sleep time of the network devices, to achieve a purpose of energy saving.

### SUMMARY

Embodiments of the disclosure provide a method for requesting a system information block (SIB), a communication device, and a storage medium.

According to a first aspect of embodiments of the disclosure, a method for requesting an SIB is provided. The method is performed by a terminal, and includes: determining, according to whether a first cell periodically transmits an SIB, a manner of acquiring the SIB of the first cell.

According to a second aspect of embodiments of the disclosure, a method for requesting an SIB is provided.

The method is performed by a first network device of a first cell, and includes:
receiving a first request sent from a terminal, in which the first request is configured for the terminal to request an SIB of the first cell; and
transmitting the SIB requested by the terminal according to the first request.

According to a third aspect of embodiments of the disclosure, a method for requesting an SIB is provided. The method is performed by a second network device of a second cell, and includes:
receiving a second request sent from the terminal in a case where the terminal has a cell reselection requirement, in which the second request is configured for the terminal to request the first cell to transmit an SIB.

According to a fourth aspect of embodiments of the disclosure, a method for requesting an SIB is provided. The method is performed by a second network device of a second cell, and includes:
transmitting a cell configuration of a first cell to a terminal, in which the cell configuration is at least configured for the terminal to determine whether the first cell periodically transmits an SIB.

According to a fifth aspect of embodiments of the disclosure, a terminal is provided. The terminal includes:
a processing module configured to determine, according to whether a first cell periodically transmits an SIB, a manner of acquiring the SIB of the first cell.

According to a sixth aspect of embodiments of the disclosure, a first network device is provided. The first network device includes:
a receiving module configured to receive a first request sent from a terminal, in which the first request is configured for the terminal to request an SIB of the first cell; and
a transmitting module configured to transmit the SIB requested by the terminal according to the first request.

According to a seventh aspect of embodiments of the disclosure, a second network device is provided. The second network device includes:
a receiving module configured to receive a second request sent from the terminal in a case where the terminal has a cell reselection requirement, in which the second request is configured for the terminal to request the first cell to transmit an SIB.

According to an eighth aspect of embodiments of the disclosure, a second network device is provided. The second network device includes:
a transmitting module configured to transmit a cell configuration of a first cell to a terminal, in which the cell configuration is at least configured for the terminal to determine whether the first cell periodically transmits an SIB.

According to a ninth aspect of embodiments of the disclosure, a terminal is provided. The terminal includes:
a processing module configured to determine, according to whether a first cell periodically transmits an SIB, a manner of acquiring the SIB of the first cell.

According to a tenth aspect of embodiments of the disclosure, a first network device is provided. The first network device includes:
a receiving module configured to receive a first request sent from a terminal, in which the first request is configured for the terminal to request an SIB of the first cell; and
a transmitting module configured to transmit the SIB requested by the terminal according to the first request.

According to an eleventh aspect of embodiments of the disclosure, a second network device is provided. The second network device includes:
a receiving module configured to receive a second request sent from the terminal in a case where the terminal has a cell reselection requirement, in which the second request is configured for the terminal to request the first cell to transmit an SIB.

According to a twelfth aspect of embodiments of the disclosure, a second network device is provided. The second network device includes:
a transmitting module configured to transmit a cell configuration of a first cell to a terminal, in which the cell configuration is at least configured for the terminal to determine whether the first cell periodically transmits an SIB.

According to a thirteenth aspect of embodiments of the disclosure, a communication device is provided. The communication device includes one or more processors. The one or more processors are configured to invoke instructions to cause the communication device to perform the method for requesting an SIB according to any one of the technical solutions of the foregoing first aspect to the fourth aspect.

According to a fourteenth aspect of embodiments of the disclosure, a storage medium is provided. The storage medium stores instructions that, when executed on a communication device, cause the communication device to perform the method for requesting an SIB according to any one of the foregoing first aspect to the fourth aspect.

With the technical solutions provided by embodiments of the disclosure, the terminal determines the manner of acquiring the SIB of the first cell based on whether the first cell periodically transmits the SIB. Compared with waiting to receive the SIB from the first cell in an inappropriate manner, the technical solutions can reduce a delay for the terminal to acquire the SIB of the first cell. The foregoing general description and the following detailed description are merely exemplary and explanatory, and shall not limit embodiments of the disclosure.

### BRIEF DESCRIPTION OF THE DRAWINGS

The accompanying drawings are incorporated into and constitute a part of this specification. The drawings illustrate embodiments of the disclosure and, together with the specification, are used to explain principles of embodiments of the disclosure.
FIG. 1A is an architectural schematic diagram of a communication system according to an embodiment of the disclosure.
FIG. 1B is a schematic diagram of a master information block (MIB) and a system information block (SIB) according to an embodiment of the disclosure.
FIG. 1C is a schematic diagram showing a resource positional relationship between a synchronization signal and physical broadcast channel (PBCH) block (SSB) and a control resource set (CORESET) according to an embodiment of the disclosure.
FIG. 1D is an interaction schematic diagram of system information (SI) according to an embodiment of the disclosure.
FIG. 2A is a flowchart of a method for requesting an SIB according to an embodiment of the disclosure.
FIG. 2B is a flowchart of a method for requesting an SIB according to an embodiment of the disclosure.
FIG. 2C is a flowchart of a method for requesting an SIB according to an embodiment of the disclosure.
FIG. 3A is a flowchart of a method for requesting an SIB according to an embodiment of the disclosure.
FIG. 3B is a flowchart of a method for requesting an SIB according to an embodiment of the disclosure.
FIG. 4 is a flowchart of a method for requesting an SIB according to an embodiment of the disclosure.
FIG. 5 is a flowchart of a method for requesting an SIB according to an embodiment of the disclosure.
FIG. 6A is a flowchart of a method for requesting an SIB according to an embodiment of the disclosure.
FIG. 6B is a flowchart of a method for requesting an SIB according to an embodiment of the disclosure.
FIG. 6C is a flowchart of a method for requesting an SIB according to an embodiment of the disclosure.
FIG. 6D is a structural schematic diagram of a medium access control control element (MAC CE) according to an embodiment of the disclosure.
FIG. 7A is a structural schematic diagram of a terminal according to an embodiment of the disclosure.
FIG. 7B is a structural schematic diagram of a first network device according to an embodiment of the disclosure.
FIG. 7C is a structural schematic diagram of a second network device according to an embodiment of the disclosure.
FIG. 7D is a structural schematic diagram of a second network device according to an embodiment of the disclosure.
FIG. 8A is a structural schematic diagram of a communication device according to an embodiment of the disclosure.
FIG. 8B is a structural schematic diagram of a chip according to an embodiment of the disclosure.

### DETAILED DESCRIPTION

Embodiments of the disclosure provide a method for requesting a system information block (SIB), a communication device, a communication system and a storage medium.

In a first aspect, a method for requesting an SIB is provided. The method is performed by a terminal, and includes: determining, according to whether a first cell periodically transmits an SIB, a manner of acquiring the SIB of the first cell.

With the above solution, the terminal determines the manner of acquiring the SIB of the first cell based on whether the first cell periodically transmits the SIB. Compared with waiting to receive the SIB from the first cell in an inappropriate manner, the solution reduces a delay for the terminal to acquire the SIB of the first cell.

In some embodiments of the first aspect, determining, according to whether the first cell periodically transmits the SIB, the manner of acquiring the SIB of the first cell includes:
in a case where a first condition is met, determining, according to whether the first cell periodically transmits the SIB, a manner of acquiring the SIB of the first cell.

The first condition includes at least one of:
the terminal having a cell reselection requirement;
the terminal recovering from a coverage hole;
the terminal receiving a system broadcast change indication of the first cell;
the terminal having a positioning requirement;
paging downlink control information (DCI) of the first cell indicating system information (SI); or
a validity period of the SIB of the first cell stored by the terminal expiring.

The above solution defines scenarios where the terminal determines the manner of acquiring the SIB of the first cell based on whether the first cell periodically transmits the SIB.

In some embodiments of the first aspect, determining, according to whether the first cell periodically transmits the SIB, the manner of acquiring the SIB of the first cell includes at least one of: in a case where the terminal has a cell reselection requirement and the first cell transmits the SIB aperiodically, determining to send a first request to the first cell, in which the first request is configured for requesting the SIB of the first cell; or in a case where the terminal has a cell reselection requirement and the first cell transmits the SIB aperiodically, determining to send a second request to a second cell, in which the second request is configured for requesting the SIB of the first cell.

In some embodiments of the first aspect, in a case where the terminal has the cell reselection requirement and the first cell transmits the SIB aperiodically, determining to send the first request for requesting the SIB of the first cell to the first cell includes at least one of:
in a case where the terminal has the cell reselection requirement and the first cell transmits the SIB aperiodically, determining to send the first request to the first cell before reselecting to the first cell; or
in a case where the terminal has the cell reselection requirement and the first cell transmits the SIB aperiodically, determining to send the first request to the first cell after reselecting to the first cell.

In some embodiments of the first aspect, determining to send the first request for requesting the SIB of the first cell to the first cell in a case where the terminal has the cell reselection requirement and the first cell transmits the SIB aperiodically includes:
in a case where the terminal has the cell reselection requirement and the first cell transmits the SIB aperiodically, determining to send a random access request to the first cell, the random access request including a first random access preamble (RAP) indicating a request for the SIB.

In some embodiments of the first aspect, the method further includes:
receiving a random access response (RAR) sent from a first network device of the first cell; and
determining whether the first network device receives the first request according to the RAR.

In some embodiments of the first aspect, the method further includes:
monitoring the requested SIB on the first cell according to a configuration for periodically transmitting the SIB; and
determining whether the first network device receives the first request according to whether the requested SIB is monitored.

In some embodiments of the first aspect, the method further includes:
in response to determining that the first network device does not receive the first request, determining to increase a transmission power of the random access request and continue sending the random access request.

In some embodiments of the first aspect, the method further includes:
determining to stop sending the random access request in a case where the transmission power of the random access request reaches a maximum transmission power and/or in a case where a transmission count of the first RAP reaches a maximum transmission count.

In some embodiments of the first aspect, the first request and/or the second request includes at least one of:
a cell identity (ID) of the first cell; or
identification information of the requested SIB.

In some embodiments of the first aspect, the method further includes at least one of:
determining, according to a master information block (MIB) of the first cell, whether the first cell periodically transmits the SIB; or
determining, according to a cell configuration of the first cell sent from a second cell, whether the first cell periodically transmits the SIB.

In some embodiments of the first aspect, determining, according to the MIB of the first cell, whether the first cell periodically transmits the SIB includes at least one of:
determining, according to whether the MIB of the first cell includes a first bit, whether the first cell periodically transmits the SIB;
determining, according to a check mode used by the MIB of the first cell, whether the first cell periodically transmits the SIB; or
determining, according to an indication content of a second bit in the MIB of the first cell, whether the first cell periodically transmits the SIB.

In some embodiments of the first aspect, determining, according to the check mode used by the MIB of the first cell, whether the first cell periodically transmits the SIB includes at least one of:
determining, according to a check algorithm used by the MIB of the first cell, whether the first cell periodically transmits the SIB; or
determining, according to a check mask used by the MIB of the first cell, whether the first cell periodically transmits the SIB.

In some embodiments of the first aspect, the cell configuration includes at least one of:
first information indicating whether the first cell periodically transmits the SIB;
second information indicating whether the first cell transmits the SIB based on an on-demand mechanism; or
third information configured for the terminal to send the first request to the first cell and/or to send a second request to the second cell, in which the first request and/or the second request are configured for the terminal to request the SIB from the first cell.

In a second aspect, a method for requesting an SIB is provided, which is performed by a first network device of a first cell. The method includes:
receiving a first request sent from a terminal, in which the first request is configured for the terminal to request an SIB of the first cell; and
transmitting the SIB requested by the terminal according to the first request.

In some embodiments of the second aspect, the first request includes a random access request, and the random access request includes a first RAP indicating a request for the SIB.

In some embodiments of the second aspect, the method further includes: transmitting a request response to the terminal, in which the request response is configured for the terminal to determine whether the first network device receives the first request.

In some embodiments of the second aspect, the request response includes a RAR, and the RAR indicates to the terminal that the first network device receives the random access request for the SIB.

In some embodiments of the second aspect, the first request is a request sent from the terminal before reselecting to the first cell; or the first request is a request sent from the terminal after reselecting to the first cell.

In some embodiments of the second aspect, the method further includes at least one of: determining, according to whether the first cell periodically transmits the SIB, a check mode of an MIB; determining, according to whether the first cell periodically transmits the SIB, whether the MIB of the first cell includes a first bit; or determining, according to whether the first cell periodically transmits the SIB, an indication content of a second bit included in the MIB of the first cell.

In some embodiments of the second aspect, determining, according to whether the first cell periodically transmits the SIB, the check mode of the MIB includes at least one of: determining, according to whether the first cell periodically transmits the SIB, a check algorithm of the MIB; or determining, according to whether the first cell periodically transmits the SIB, a check mask of the MIB.

In a third aspect, a method for requesting an SIB is provided, which is performed by a second network device of a second cell. The method includes:
receiving a second request sent from a terminal in a case where the terminal has a cell reselection requirement, in which the second request is configured for the terminal to request a first cell to transmit an SIB.

In some embodiments of the third aspect, the method further includes: transmitting the second request to a first network device of the first cell.

In a fourth aspect, a method for requesting an SIB is provided, which is performed by a second network device of a second cell. The method includes:
transmitting a cell configuration of a first cell to a terminal, in which the cell configuration is at least configured for the terminal to determine whether the first cell periodically transmits an SIB.

In some embodiments of the fourth aspect, the cell configuration includes at least one of: first information indicating whether the first cell periodically transmits the SIB; second information indicating whether the first cell transmits the SIB based on an on-demand mechanism; third information configured for the terminal to send a first request to the first cell and/or to send a second request to the second cell, in which the first request and/or the second request are configured for the terminal to request the SIB from the first cell.

In a fifth aspect, a terminal is provided, including: a processing module configured to determine, according to whether a first cell periodically transmits an SIB, a manner of acquiring the SIB of the first cell.

In a sixth aspect, a first network device is provided, including: a receiving module configured to receive a first request sent from a terminal, in which the first request is configured for the terminal to request an SIB of the first cell; and
a transmitting module configured to transmit the SIB requested by the terminal according to the first request.

In a seventh aspect, a second network device is provided, including: a receiving module configured to receive a second request sent from the terminal in a case where the terminal has a cell reselection requirement, in which the second request is configured for the terminal to request the first cell to transmit an SIB.

In an eighth aspect, a second network device is provided, including: a transmitting module configured to transmit a cell configuration of a first cell to a terminal, in which the cell configuration is at least configured for the terminal to determine whether the first cell periodically transmits an SIB.

In a ninth aspect, embodiments of the disclosure provide a communication device, including one or more processors.

The one or more processors are configured to invoke instructions to cause the communication device to perform the method for requesting an SIB according to any one of the implementations of the first aspect to the fourth aspect.

In a tenth aspect, embodiments of the disclosure provide a storage medium. The storage medium stores instructions which, when executed on a communication device, cause the communication device to perform the method for requesting an SIB according to any one of the implementations of the first aspect to the fourth aspect.

In an eleventh aspect, embodiments of the disclosure provide a program product. When executed by a communication device, the program product causes the communication device to perform the method for requesting an SIB according to any one of the implementations of the first aspect to the fifth aspect.

In a twelfth aspect, embodiments of the disclosure provide a computer program. When the computer program runs on a computer, the computer is caused to perform the method for requesting an SIB according to any one of the implementations of the first aspect to the fourth aspect.

The foregoing terminal, network device, communication system, program product and computer program are all configured to execute the methods provided by embodiments of the disclosure. Therefore, reference may be made to corresponding methods for the beneficial effects thereof, which are not elaborated herein.

Embodiments of the disclosure provide a method for requesting an SIB, a communication device, a communication system and a storage medium. Embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, embodiments may be combined arbitrarily. For example, some or all steps of different embodiments may be combined arbitrarily, and a certain embodiment may be combined arbitrarily with implementations of other embodiments.

In embodiments of the disclosure, unless otherwise specified and without logical conflict, the terms and/or descriptions between embodiments are consistent and may be cross-referenced. Technical features in different embodiments may be combined to form new embodiments according to their inherent logical relationships.

The terms used in embodiments of the disclosure are merely for the purpose of describing specific embodiments and are not intended to limit the disclosure.

In embodiments of the disclosure, unless otherwise stated, elements expressed in the singular form, such as "a", "an", "the", "aforesaid", "said", "foregoing", "this", may denote "one and only one", or "one or more", "at least one", etc. For example, when articles such as "a", "an", and "the" in English are used in translation, the noun following the article may be understood as a singular form or a plural form.

In embodiments of the disclosure, "a plurality of' refers to two or more.

In some embodiments, terms such as "at least one (of)", "one or more", "a plurality of", and "multiple" may be used interchangeably.

In some embodiments, recitations such as "at least one of A, B", "A and/or B", "A in one case and B in another case", "A in response to one case and B in response to another case" may include the following technical solutions as appropriate: in some embodiments, A (performing A independently of B); in some embodiments, B (performing B independently of A); in some embodiments, selectively performing from A and B (A and B are selectively performed); in some embodiments, both A and B (both A and B are performed). The same applies when there are more items such as A, B, C.

In some embodiments, a recitation such as "A or B" may include the following technical solutions as appropriate: in some embodiments, A (performing A independently of B); in some embodiments, B (performing B independently of A); in some embodiments, selectively performing from A and B (A and B are selectively performed). The same applies when there are more items such as A, B, C.

Prefixes such as "first" and "second" in embodiments of the disclosure are merely used to distinguish different description objects and do not limit the position, order, priority, number, or content of the description objects. For the description of the description objects, refer to the description in the claims or the context of embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the number of the description object is not limited by the ordinal number and may be one or more. Taking "the first apparatus" as an example, the number of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus may be construed as physical or virtual, and its names are not limited to those described in embodiments. In some cases, terms such as "apparatus", "equipment", "device", "circuit", "network element", "node", "function", "unit", "section", "system", "network", "chip", "chip system", "entity" and "subject" are interchangeable.

**In** some embodiments, the term "network" may be interpreted as an apparatus included in a network (e.g., a network device, an access network device, a core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, the access network device, the core network device, or the network device may be replaced with a terminal. For example, embodiments of the disclosure may also be applied to a structure where communication between the access network device, the core network device, or the network device and the terminal is replaced with communication among a plurality of terminals (such as device-to-device (D2D), vehicle-to-everything (V2X), etc.). In this case, a structure may also be adopted in which the terminal has all or part of the functions of the access network device. In addition, terms such as "uplink" and "downlink" may also be replaced with terms corresponding to communication between terminals (such as "side"). For example, an uplink channel, a downlink channel and the like may be replaced with a sidelink channel, and an uplink, a downlink and the like may be replaced with a sidelink.

In some embodiments, the terminal may be replaced with the access network device, the core network device, or the network device. In this case, a structure may also be adopted in which the access network device, the core network device, or the network device has all or part of the functions of the terminal.

In some embodiments, acquiring data, information, etc., may comply with the laws and regulations of the country where it is located.

In some embodiments, data, information, etc., may be acquired with the user's consent.

In addition, each element, each row, or each column in the tables of embodiments of the disclosure may be implemented as a separate embodiment, and any combination of any elements, any rows, or any columns may also be implemented as a separate embodiment.

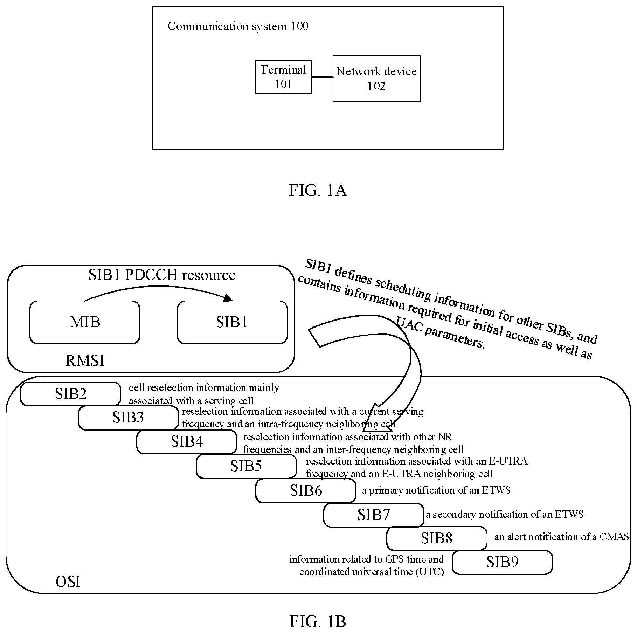

FIG. 1A is an architectural schematic diagram of a communication system according to an embodiment of the disclosure.

As shown in FIG. 1A, a communication system 100 includes a terminal 101 and a network device 102. The network device 102 may include an access network device and/or a core network device.

In some embodiments, the terminal 101 may include at least one of a mobile phone, a wearable device, an Internet of Things (IoT) device, a vehicle with communication functions, an intelligent vehicle, an on-board terminal, a tablet computer (Pad), a computer with wireless transceiving functions, a road side unit (RSU), a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, or a wireless terminal in a smart home, but is not limited thereto.

In some embodiments, the terminal is also referred to as a UE.

In some embodiments, the access network device may be a node or device that connects a terminal to a wireless network. The access network device may include at least one of an evolved nodeB (eNB) in a fifth generation (5G) communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, or an access node in a wireless fidelity (Wi-Fi) system, but is not limited thereto.

In some embodiments, the technical solutions of the disclosure may be applicable to the open RAN architecture. In this case, interfaces between access network devices or within the access network device involved in embodiments of the disclosure may be changed to internal interfaces of the open RAN, and procedures and information interactions between these internal interfaces may be implemented by software or programs.

In some embodiments, the access network device may be composed of a central unit (CU) and a distributed unit (DU), where the CU may also be referred to as a control unit. The adoption of a CU-DU structure may split protocol layers of the access network device, functions of some protocol layers are placed in the CU for centralized control, and the remaining part or all of the functions of the protocol layers are distributed in the DU, with the CU centrally controlling the DU, but is not limited thereto.

In some embodiments, the core network device may be a single device, including a first network element and the like, or a plurality of devices or a device group each including a first network element. A network element may be virtual or physical. A core network includes, for example, at least one of an evolved packet core (EPC), a 5G core network (5GCN), or a next generation core (NGC).

The communication system described in embodiments of the disclosure is intended to illustrate the technical solutions of embodiments of the disclosure more clearly, and does not constitute a limitation on the technical solutions in embodiments of the disclosure. Those of ordinary skill in the art will appreciate that, with the evolution of system architectures and the emergence of new service scenarios, the technical solutions provided in embodiments of the disclosure are also applicable to similar technical problems.

The following embodiments of the disclosure may be applied to the communication system 100 shown in FIG. 1A or some subjects thereof, but are not limited thereto. The subjects shown in FIG. 1A are exemplary; a communication system may include all or some of the subjects in FIG. 1A, and may also include other subjects beyond those in FIG. 1A. The number and form of each subject are arbitrary; each subject may be physical or virtual. Connection relationships between the subjects are exemplary. The subjects may or may not be connected to each other, the connection between the subjects may be in any manner, which may be a direct connection or an indirect connection, and may be a wired connection or a wireless connection.

Embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, IoT system, vehicle-to-everything (V2X), systems using other measurement methods, next-generation systems extended based on them, etc. In addition, a plurality of systems may be combined (for example, a combination of LTE or LTE-A and 5G, etc.) for application.

In an NR system, a content broadcast by a cell may include: an MIB, an SIB1, and other system information (OSI). Remaining minimum system information (RMSI) may at least include the SIB1.

In some embodiments, the RMSI may include an MIB and the SIB1.

As shown in FIG. 1B, the MIB may include configuration information of the SIB1. For example, the MIB includes configuration information of a scheduling resource. The scheduling resources may include a physical downlink control channel (PDCCH) resource. DCI transmitted on the PDCCH resource is configured to schedule the SIB1. The SIB1 may in turn be used to configure a scheduling resource for OSI. In some embodiments, the SIB1 may further include information required for accessing a corresponding cell, a unified access control (UAC) parameter and the like.

For example, an SIB2 may include cell reselection information, which is mainly associated with a serving cell.

For example, an SIB3 may include reselection information associated with a current serving frequency and an intra-frequency neighboring cell.

For example, an SIB4 may include reselection information associated with other NR frequencies and an inter-frequency neighboring cell.

For example, an SIB5 may include reselection information associated with an evolved universal terrestrial radio access (E-UTRA) frequency and an E-UTRA neighboring cell.

For example, an SIB6 may include a primary notification of an emergency telecommunications warning system (ETWS).

For example, an SIB7 may include a secondary notification of an ETWS.

For example, an SIB8 may include an alert notification of a commercial mobile alert system (CMAS).

For example, an SIB9 may include information associated with a positioning system time and a universal time.

In some embodiments, the SIB1 may include: a cell selection configuration, a cell access configuration, a scheduling configuration for OSI and/or a cell common configuration, a configuration parameter related to access control, and/or a configuration parameter related to cell capability.

In some embodiments, a control resource set (CORESET) for RMSI is configured by the MIB. There are at least three types of resource positional relationships between the CORESET for RMSI and a synchronization signal and physical broadcast channel (PBCH) block (SSB). The CORESET includes one or more PDCCH resources. A physical downlink shared channel (PDSCH) may be configured to transmit an SIB.

A terminal may acquire a PDCCH resource position according to a PBCH in the SSB, and further monitor the DCI based on the PDCCH resource position. The terminal receives the RMSI according to a scheduling of monitored DCI.

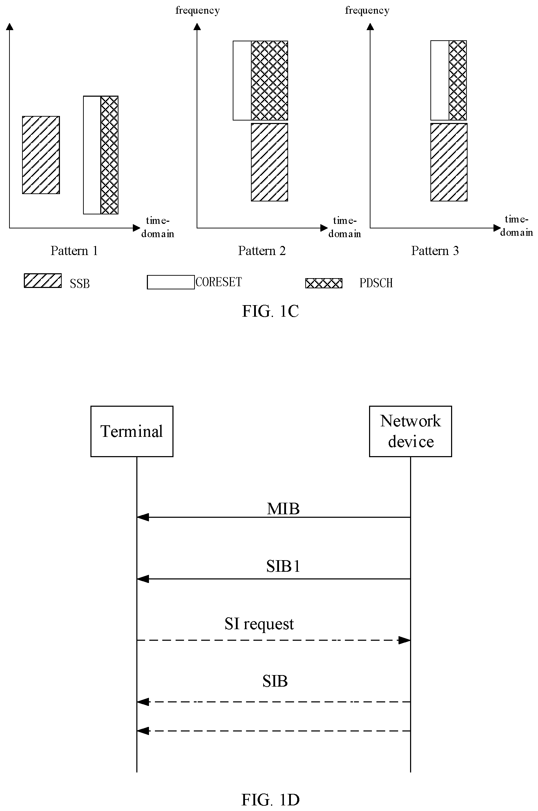

FIG. 1C illustrates patterns of CORESET and SSB of a communication system under different multiplexing modes.

Pattern 1 is applied to a communication system adopting time division multiplexing (TDM). Pattern 2 is applied to a communication system adopting both TDM and frequency division multiplexing (FDM). Pattern 3 is applied to a communication system adopting FDM.

In some embodiments, SI transmitted on a network side is reduced for network energy saving (NES).

In some embodiments, a network device transmits only the MIB and SIB1, and all other SIBs are requested on demand. That is, when a terminal needs other SIBs, the terminal sends an SI request to the network device. After receiving the SI request, the network device determines whether to broadcast the corresponding SIB.

The SI request may include: an SI request based on message 1 (Msg1) of a random access request and/or an SI request based on message 3 of a random access request.

In some embodiments, the SI request based on Msg1 may use a reserved RAP and/or a random access channel (RACH) resource.

In some embodiments, the SI request based on Msg3 does not require the reserved RACH resources or the RAP.

The SI request based on Msg3 may be defined as an RRCSystemInfoRequest message (Msg3).

The terminal learns whether to adopt the SI request based on Msg1 or the SI request based on Msg3 by reading the SI.

If the base station provides configuration information for the SI request (for example, si-Request-Config) in the SIB1, the SI request based on Msg1 is adopted; otherwise, the SI request based on Msg3 is adopted.

After receiving the SI request, the base station may send an SI request acknowledgement to the terminal.

After receiving the SI request acknowledgement, the terminal receives the SI within a current modification cycle until the modification cycle ends or the SI is received. If a RACH failure occurs during the SI request procedure, subsequent behaviors of the UE depend on UE implementation.

FIG. 1D illustrates an information interaction method between a network device and a terminal, which may include:
the network device broadcasting an MIB;
the network device broadcasting an SIB1;
the terminal sending an SI request; and
the network device transmitting SI.

Generally, to allow more terminals to access or camp on a cell in an energy saving state, the cell needs to periodically transmit the MIB and the SIB1. Therefore, it is a problem to be further solved how to enable the terminal to successfully access or camp on the cell in the energy saving state when the network device transmits the SIB such as SIB1 aperiodically.

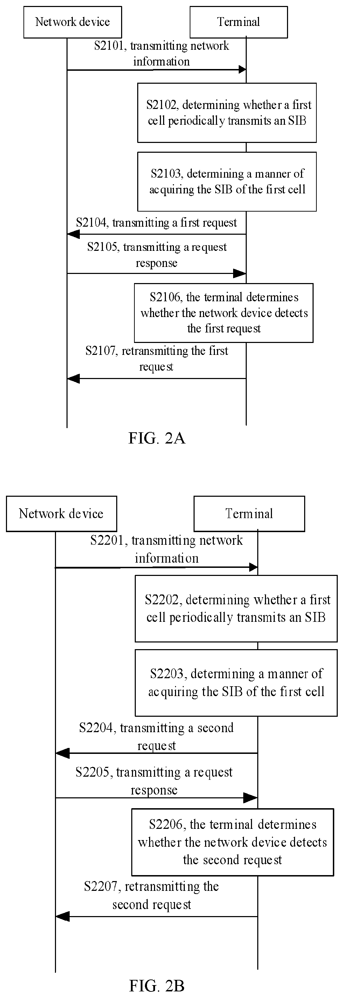

In view of this, as shown in FIG. 2A, an embodiment of the disclosure provides a method for requesting an SIB, which is performed by a communication system. The method may include the following steps.

At S2101, a network device transmits network information to a terminal.

In some embodiments, the network device may be an access network device.

In some embodiments, the network device that transmits the network information may be a first network device and/or a second network device, where the second network device is different from the first network device. Exemplarily, the first network device and the second network device may be two adjacently arranged access network devices.

The first network device is a network device of a first cell, and the second network device may be a network device of a second cell.

The first cell and the second cell may be neighboring cells. Exemplarily, the first cell and the second cell may be intra-frequency neighboring cells or inter-frequency neighboring cells.

The first cell and the second cell may be cells with an overlapping coverage area.

For a carrier aggregation and/or dual connectivity scenario, the second cell may be a primary cell of the first cell while the first cell is a secondary cell. Alternatively, the first cell is a conventional secondary cell, and the second cell may be a primary secondary cell.

In some embodiments, the second cell may be a current cell of the terminal. Exemplarily, when the terminal is in an RRC connected state, the second cell may be a current serving cell of the terminal. As another example, when the terminal is in an RRC idle state and/or an RRC inactive state, the second cell may be a current camping cell of the terminal.

In some embodiments, the network device transmits the network information in a broadcast manner, a unicast manner or a multicast manner.

In some embodiments, the network information may be an MIB of the first cell.

In some embodiments, the network information may be a cell configuration of the first cell.

In some embodiments, the network information is configured for the terminal to determine whether the first cell periodically transmits an SIB.

In some embodiments, the network information is configured for the terminal to determine whether the first cell periodically transmits an SIB1.

In some embodiments, periodically transmitting the SIB may include: transmitting the SIB according to a semi-statically configured period, and/or transmitting the SIB according to a period corresponding to a periodic configuration or a dynamic configuration.

In some embodiments, in a case where the first cell transmits the SIB aperiodically, the first cell may not transmit the SIB, may transmit the SIB based on an on-demand mechanism, or may transmit the SIB in response to a request from the terminal.

Transmitting the SIB based on the on-demand mechanism includes but is not limited to at least one of:
the cell transmitting the SIBs according to its own requirements, for example, when the cell needs to establish downlink synchronization or perform downlink connection reestablishment, it is deemed that a requirement is generated, and thus the cell may actively broadcast the SIB; or
the cell transmitting the SIB according to a requirement of the terminal, for example, when the terminal needs to acquire the SIB, the terminal may send a request to the network device. Accordingly, the network device learns that the terminal needs to acquire the SIB, and then determines whether to broadcast the SIB.

In some embodiments, the terminal may send the request for the SIB by transmitting a wake up signal (WUS) to the cell that transmits the SIB aperiodically.

In some embodiments, the first network device of the first cell periodically broadcasts an MIB.

In some embodiments, the first network device of the first cell determines the MIB of the first cell according to whether the first cell periodically transmits the SIB.

In some embodiments, the first network device of the first cell determines the MIB of the first cell according to whether the first cell periodically transmits the SIB 1.

In some embodiments, determining, by the first network device of the first cell, the MIB of the first cell according to whether the first cell periodically transmits the SIB includes but is not limited to at least one of:
determining a check mode of the MIB according to whether the first cell periodically transmits the SIB;
determining, according to whether the first cell periodically transmits the SIB, whether the MIB of the first cell includes a first bit; or
determining, according to whether the first cell periodically transmits the SIB, an indication content of a second bit included in the MIB.

In some embodiments, the MIB of the first cell explicitly indicates whether the first cell periodically transmits the SIB. Exemplarily, the MIB of the first cell includes an indication bit for indicating whether the first cell periodically transmits the SIB. For example, the MIB of the first cell explicitly indicates whether the first cell periodically transmits the SIB1.

In some embodiments, the MIB of the first cell implicitly indicates whether the first cell periodically transmits the SIB. For example, when the first cell transmits the SIB aperiodically, the MIB may include a PUCCH resource for scheduling information (for example, DCI) of the SIB1. As another example, when the first cell periodically transmits the SIB, the MIB does not include the PUCCH resource for scheduling information (for example, DCI) of the SIB1. As a further example, the MIB of the first cell implicitly indicates whether the first cell periodically transmits the SIB1.

In some embodiments, whether the first cell periodically transmits the SIB is determined according to the check mode of the MIB.

For example, in a case where the first cell periodically transmits the SIB, the MIB of the first cell adopts a first check mode. In a case where the first cell transmits the SIB aperiodically, the MIB of the first cell adopts a second check mode. In this case, in a case where the terminal successfully verifies the MIB of the first cell by adopting the first check mode, it is determined that the first cell periodically transmits the SIB; otherwise, it is determined that the first cell transmits the SIB aperiodically. Alternatively, in a case where the terminal successfully verifies the MIB of the first cell by adopting the second check mode, it is determined that the first cell transmits the SIB aperiodically; otherwise, it is determined that the first cell periodically transmits the SIB.

In some embodiments, whether the first cell periodically transmits the SIB is determined according to a check algorithm adopted by the MIB. For example, different check algorithms may correspond to different polynomials for generating a cyclic redundancy check (CRC).

In some embodiments, whether the first cell periodically transmits the SIB is determined according to a check mask adopted by the MIB.

Taking CRC as an example, the check mask may be a CRC mask. For example, an information bit of the MIB is XORed with a bit sequence generated based on a polynomial to obtain a CRC with a specified length. The CRC with the specified length is then XORed with the check mask and appended to an end of the MIB, and the network device transmits an entire content to the terminal.

In some embodiments, whether the first cell periodically transmits the SIB is determined according to whether the MIB includes a first bit.

For example, an unused idle bit and/or a reserved bit in the MIB may be used as the first bit. A quantity of the first bit may be one or more. Different values of the first bit respectively indicate whether the first cell periodically transmits the SIB.

Whether the first cell periodically transmits the SIB is determined according to an indication content of a second bit included in the MIB.

In some embodiments, a newly added bit or an occupied idle bit in the MIB may be used as the second bit. A quantity of the second bit may be one or more. The indication content of the second bit corresponds to a value of the second bit. Whether the first cell periodically transmits the SIB is determined according to the indication content of the second bit.

In some embodiments, the first cell determines a value of spare bit in the MIB of the first cell according to whether the first cell periodically transmits an SSB.

The first cell determines, according to whether the first cell periodically transmits the SSB, a value of an ssb-SubcarrierOffset indication bit in the MIB of the first cell.

The first cell determines, according to whether the first cell periodically transmits the SSB, a value of an indication bit for a system frame number (SFN) in the MIB of the first cell.

The first cell determines, according to whether the first cell periodically transmits the SSB, a value of a demodulation reference signal (DMRS)-type A position indication bit in the MIB of the first cell.

The first cell determines, according to whether the first cell periodically transmits the SSB, a value of a cell barred indication bit in the MIB of the first cell and determines a type of the first cell.

The first cell determines, according to whether the first cell periodically transmits the SSB, a value of a subcarrierSpacingCommon indication bit in the MIB of the first cell.

The first cell determines, according to whether the first cell periodically transmits the SSB, a value of an intraFreqReselection indication bit in the MIB of the first cell.

The first cell determines, according to whether the first cell periodically transmits the SSB, a value of a pdcch-ConfigSIB1 indication bit in the MIB of the first cell.

The first cell determines, according to whether the first cell periodically transmits the SSB, a value of a CellBarred indication bit in the MIB of the first cell.

In some embodiments, in a case where a value of at least one indication bit in the MIB of the first cell falls within a first set, it is indicated that the first cell is a first-type cell. In some embodiments, in a case where a value of at least one indication bit in the MIB of the first cell falls within a second set, it is indicated that the first cell is a second-type cell.

In some embodiments, the value of the ssb-SubcarrierOffset indication bit in the MIB includes a last bit of the ssb-SubcarrierOffset indication bit in the MIB.

**In** some embodiments, in a case where the value of the ssb-SubcarrierOffset indication bit in the MIB of the first cell falls within the first set, it is indicated that the first cell is the first-type cell. In some embodiments, in a case where the value of the ssb-SubcarrierOffset indication bit in the MIB of the first cell falls within the second set, it is indicated that the first cell is the second-type cell.

In some embodiments, in a case where the value of the pdcch-ConfigSIB1 indication bit in the MIB of the first cell falls within the first set, it is indicated that the first cell is the first-type cell. In some embodiments, in a case where the value of the pdcch-ConfigSIB1 indication bit in the MIB of the first cell falls within the second set, it is indicated that the first cell is the second-type cell.

In some embodiments, values in the first set and the second set may be configured by the network device, or predefined in a form such as a protocol agreement.

Exemplarily, values in the first set are even numbers, and values in the second set are odd numbers. Exemplarily, values in the first set are odd numbers, and values in the second set are even numbers. As another example, a value range of the first set is different from a value range of the second set. For instance, all values of the first set may be smaller than values of the second set, or all values of the first set may be larger than values of the second set.

In some embodiments, the second network device of the second cell transmits the cell configuration of the first cell. Exemplarily, the cell configuration is configured for a terminal to determine whether the first cell periodically transmits the SIB. For example, the cell configuration is at least configured for the terminal to determine whether the first cell periodically transmits the SIB1.

In some embodiments, the cell configuration includes at least one of:
first information indicating whether the first cell periodically transmits the SIB;
second information indicating whether the first cell transmits the SIB based on an on-demand mechanism; or
third information configured for the terminal to send the first request to the first cell and/or to send a second request to the second cell, in which the first request and/or the second request are configured for the terminal to request the SIB from the first cell.

In some embodiments, when the cell configuration includes the first information, the second information may be omitted from the cell configuration.

In some embodiments, when the cell configuration includes the second information, the first information may be omitted from the cell configuration.

In some embodiments, when the cell configuration includes the third information, both the first information and the second information may be omitted from the cell configuration. For example, the cell configuration is equivalent to configuring the terminal to request the SIB of the first cell via the first request.

In some embodiments, the third information includes at least one of:
a sending mode of the first request, for example, the sending mode includes a one-time transmission and/or a repeated transmission; or
time domain position information of a receiving time window.

In some embodiments, in a case where the third information does not include the time domain position information of the receiving time window, the sending mode of the first request is defaulted to the one-time transmission, and indication information of the sending mode may be omitted accordingly.

At S2102, the terminal determines whether a first cell periodically transmits an SIB.

In some embodiments, the terminal determines, according to the MIB of the first cell and/or the cell configuration, whether the first cell periodically transmits the SIB.

In some embodiments, the terminal determines, according to the MIB of the first cell and/or the cell configuration, whether the first cell periodically transmits the SIB within a current time period.

At S2103, the terminal determines a manner of acquiring the SIB of the first cell.

In some embodiments, the terminal determines the manner of acquiring the SIB of the first cell according to whether the first cell periodically transmits the SIB.

In some embodiments, in a case where the first cell periodically transmits the SIB, the terminal receives the SIB from the first cell at a corresponding moment according to a period for the first cell to transmit the SIB.

In some embodiments, in a case where the first cell transmits the SIB aperiodically, the terminal determines the manner of acquiring the SIB of the first cell according to a cell type of the first cell.

In some embodiments, in a case where the first cell transmits the SIB aperiodically and the first cell is the first-type cell that transmits the SIB on demand, the terminal determines to acquire the SIB from the first cell based on request information.

In some embodiments, in a case where the first cell transmits the SIB aperiodically and the first cell is the second-type cell that does not transmit the SIB, the terminal determines to acquire the SIB of the first cell from a reference cell (also referred to as an anchor cell) of the first cell.

In some embodiments, in a case where the terminal has a cell reselection requirement, the terminal determines the manner of acquiring the SIB of the first cell according to whether the first cell periodically transmits the SIB.

In a case where the terminal recovers from a coverage hole, the terminal determines the manner of acquiring the SIB of the first cell according to whether the first cell periodically transmits the SIB.

In some embodiments, the coverage hole herein may refer to an area without a network coverage.

In a case where the terminal receives a system broadcast change indication of the first cell, the terminal determines the manner of acquiring the SIB of the first cell according to whether the first cell periodically transmits the SIB.

In some embodiments, in a case where the terminal receives the system broadcast change indication of the first cell, it is indicated that the first cell updates the SIB. For example, the system broadcast change indication of the first cell may indicate whether SIB1 and/or SIBn are updated, where n is a positive integer greater than or equal to 2. In a case where SIB1 is updated, the terminal needs to acquire the SIB1 of the first cell. In a case where SIBn is updated, the terminal needs to acquire the SIB1 of the first cell and obtain a resource configuration of the SIBn according to the SIB1.

In a case where the terminal has a positioning requirement, the terminal determines the manner of acquiring the SIB of the first cell according to whether the first cell periodically transmits the SIB.

Exemplarily, when the terminal has a satellite positioning requirement, the terminal needs to acquire the SIB related to positioning. For example, the positioning requirement of the terminal means that the terminal needs to acquire SIB9 carrying timing information of a satellite positioning system. To acquire the SIB9, the terminal needs to obtain configuration information of the SIB9 based on the SIB1.

In a case where the terminal receives paging DCI of the first cell which indicates SI update, the terminal determines the manner of acquiring the SIB of the first cell according to whether the first cell periodically transmits the SIB.

In some embodiments, in a case where the paging DCI received by the terminal indicates the SI update, it means that the SIB is updated. Similarly, to properly camp on or access the first cell, the terminal needs to acquire the updated SIB, and thus needs to determine the manner of acquiring the SIB of the first cell.

In a case where a validity period of the SIB of the first cell stored by the terminal expires, the terminal determines the manner of acquiring the SIB of the first cell according to whether the first cell periodically transmits the SIB.

In some embodiments, the SIB of the first cell has a certain validity period. In a case where the validity period expires, the terminal may fail to confirm whether the SIB is still valid, so the terminal needs to re-acquire the SIB of the first cell and accordingly determine the manner of acquiring the SIB of the first cell.

At S2104, the terminal sends a first request to the first cell.

In some embodiments, in a case where the determined manner of acquiring the SIB of the first cell is to acquire the SIB by sending the first request to the first cell, the terminal sends the first request to the first cell.

Exemplarily, in a case where the first cell is a cell that transmits the SIB in response to a request from the terminal, the terminal sends the first request to the first cell.

Exemplarily, in a case where the first cell is a cell that transmits the SIB on demand, the terminal sends the first request to the first cell.

Exemplarily, in a case where the first cell transmits the SIB in response to a request from the terminal or transmits the SIB on demand and the cell configuration specifies acquiring the SIB of the first cell via the first request, the terminal sends the first request to the first cell.

In some embodiments, the terminal sends the first request to the first cell before accessing or camping on the first cell.

In some embodiments, the terminal sends the first request to the first cell during a random access procedure for accessing or camping on the first cell.

Exemplarily, in a case where the terminal has the cell reselection requirement and the first cell transmits the SIB aperiodically, the terminal determines to send the first request for requesting the SIB of the first cell to the first cell.

For example, in a case where the terminal has the cell reselection requirement and the first cell transmits the SIB aperiodically, the terminal determines to send the first request for requesting the SIB of the first cell to the first cell before reselecting to the first cell.

The first request sent to the first cell before reselecting to the first cell is configured to request the SIB.

For example, the terminal sends the first request to the first cell during a cell reselection process.

In some embodiments, the first request may include identification information of the requested SIB. For example, the SIB requested by the terminal may be SIB1. In some embodiments, the identification information of the SIB may be omitted from the first request. For example, the SIB requested by the terminal before reselecting to the first cell is defaulted to a designated SIB. The designated SIB includes but is not limited to SIB1.

In some embodiments, the first request further includes a cell ID of the first cell.

In some embodiments, the cell ID includes but is not limited to a physical cell ID and/or a higher-layer cell ID.

It should be noted that the cell ID of the first cell is optional content in a case where the terminal sends the first request to the first cell. For example, in a case where the terminal sends the first request on a resource position for sending the first request of the first cell, the first request may not carry the cell ID of the first cell.

In some embodiments, the terminal may request the SIB from the first cell based on an Msg1 of a four-step random access procedure.

In some embodiments, the terminal may request the SIB from the first cell based on an Msg3 of a four-step random access procedure.

In some embodiments, the terminal may request the SIB from the first cell based on an MsgA of a two-step random access procedure.

In some embodiments, when the terminal has the cell reselection requirement and the first cell transmits the SIB aperiodically, the terminal determines to send the first request for requesting the SIB of the first cell to the first cell after reselecting to the first cell.

As another example, when the terminal has the cell reselection requirement and the first cell transmits the SIB aperiodically, the terminal determines to send a second request for requesting the SIB of the first cell to the second cell.

In some embodiments, the network device may reserve a specific RAP. When the terminal sends a random access message carrying the specific RAP, it is deemed that the terminal sends a request for the SIB to the network device.

In some embodiments, there are multiple specific RAPs. For example, there are correspondences between different specific RAPs and different SIBs. In this way, the terminal selects, according to the correspondences and the SIB to be requested, a corresponding specific RAP to send the random access message.

At S2105, the first cell transmits a request response.

In some embodiments, the request response may include a RAR transmitted by the first cell.

In some embodiments, the first cell transmits the RAR to the terminal when determining to allow the terminal to camp and/or determining to transmit the SIB requested by the terminal.

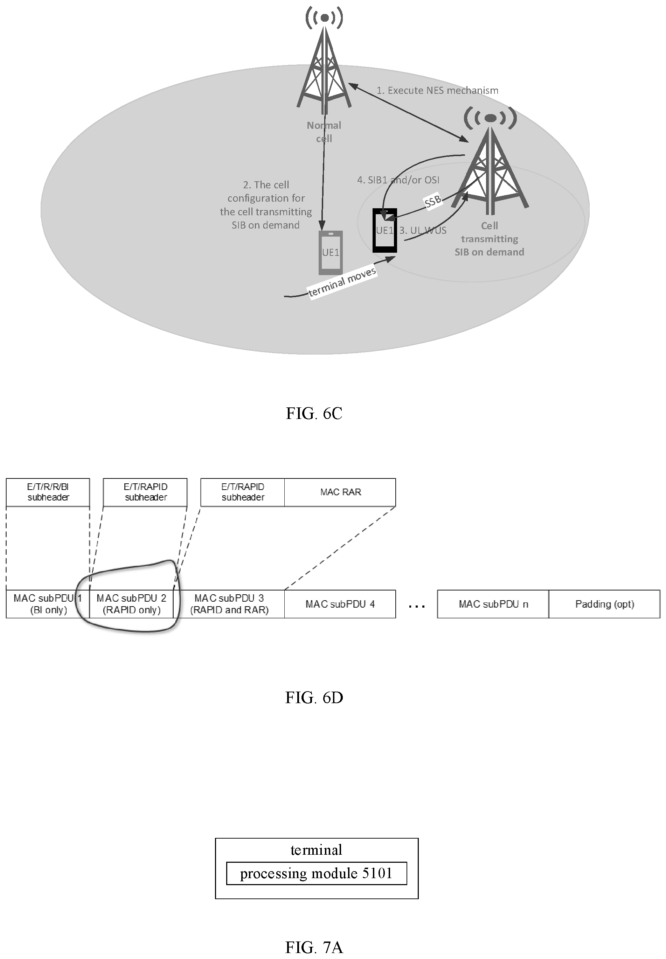

As shown in FIG. 6D, the RAR may include one or more subheaders.

In some embodiments, a subheader may include a RAP ID.

In some embodiments, in a case where the terminal receives a subheader containing its own RAP ID, the terminal may determine that the RAR is received.

In other embodiments, in a case where the terminal receives a subheader containing only the RAP ID, the terminal may determine that the RAR is received.

In some embodiments, such subheaders may further include a subheader carrying a backoff indicator (BI).

In some embodiments, the RAR may further include a MAC RAR.

In some embodiments, the request response may include the SIB requested by the terminal and transmitted by the first cell.

In some embodiments, the request response may be an RRC message indicating to transmit the SIB requested by the terminal.

In some embodiments, the request response may be an RRC message indicating the SIB to be broadcast.

In some embodiments, the request response may indicate whether to transmit the SIB requested by the terminal. In a case where the request response indicates that the first cell and/or the second cell will transmit the SIB requested by the terminal, the terminal monitors the SIB transmitted by the first cell and/or the second cell.

In some embodiments, the request response may further carry resource location information for the first cell and/or the second cell to transmit the SIB requested by the terminal, so that the terminal monitors the SIB at a resource position indicated by the resource location information, for example, monitors SIB1.

At S2106, the terminal determines whether the network device detects the first request.

In some embodiments, the terminal monitors the request response corresponding to the first request within a receiving time window after sending the first request. In a case where the request response is detected within the time window, it is determined that the network device detects the first request; otherwise, it is deemed that no request response is detected by the terminal.

In some embodiments, the terminal determines whether the network side receives the first request according to whether the SIB requested by the terminal is received from the network side. For example, in a case where the terminal detects the SIB requested by the terminal transmitted by the first network device, it is determined that the network side receives the first request; otherwise, it is deemed that the network side does not receive the first request.

In some embodiments, the terminal determines whether the network side receives the first request according to whether the RAR is received. For example, in a case where the terminal detects the RAR containing its own RAP ID at a receiving timing of the RAR, it is determined that the network side receives the first request; otherwise, it is deemed that the network side does not receive the first request.

In some embodiments, the terminal determines whether the network side receives the first request according to whether the request response for the first request is received. For example, in a case where the terminal receives the request response transmitted by the first network device, it is determined that the network side receives the first request; otherwise, it is deemed that the network side does not receive the first request.

At S2107, the terminal retransmits the first request to the first cell.

In some embodiments, the terminal retransmits the first request when determining that the network device does not detect the first request.

In some embodiments, when determining that the network device does not detect the first request, the terminal increases a transmission power and retransmits the first request, until a transmission count of the first request reaches a maximum count or the transmission power of the first request reaches a maximum transmission power.

In some embodiments, the terminal increases a power of the random access request and retransmits the random access request corresponding to the first request.

In some embodiments, the terminal increases the power of the random access request and retransmits the random access request corresponding to the first request, until the transmission power of the random access request reaches the maximum transmission power or the transmission count of the first RAP reaches the maximum transmission count.

In some embodiments, in a case where it is determined that the network device detects the first request, the terminal stops sending the first request to the first cell regardless of whether the network side transmits the SIB requested by the terminal.

In some embodiments, in a case where the terminal has urgent service data to transmit, the terminal may choose to access or camp on another cell that periodically transmits the SSB and/or the SIB.

As shown in FIG. 2B, an embodiment of the disclosure provides a method for requesting an SIB, which is performed by a communication system. The method may include the following steps.

At S2201, a network device transmits network information to a terminal.

In some embodiments, the network device may be an access network device.

In some embodiments, the network device that transmits the network information may be a first network device and/or a second network device, where the second network device is different from the first network device. Exemplarily, the first network device and the second network device may be two adjacently arranged access network devices.

The first network device is a network device of a first cell, and the second network device may be a network device of a second cell.

The first cell and the second cell may be neighboring cells. Exemplarily, the first cell and the second cell may be intra-frequency neighboring cells or inter-frequency neighboring cells.

The first cell and the second cell may be cells with an overlapping coverage area.

For a carrier aggregation and/or dual connectivity scenario, the second cell may be a primary cell of the first cell while the first cell is a secondary cell. Alternatively, the first cell is a conventional secondary cell, and the second cell may be a primary secondary cell.

In some embodiments, the second cell may be a current cell of the terminal. Exemplarily, when the terminal is in an RRC connected state, the second cell may be a current serving cell of the terminal. As another example, when the terminal is in an RRC idle state and/or an RRC inactive state, the second cell may be a current camping cell of the terminal.

In some embodiments, the network device transmits the network information in a broadcast manner, a unicast manner or a multicast manner.

In some embodiments, the network information may be an MIB of the first cell.

In some embodiments, the network information may be a cell configuration of the first cell.

In some embodiments, the network information is configured for the terminal to determine whether the first cell periodically transmits an SIB.

In some embodiments, the network information is configured for the terminal to determine whether the first cell periodically transmits an SIB1.

In some embodiments, periodically transmitting the SIB may include: transmitting the SIB according to a semi-statically configured period, and/or transmitting the SIB according to a period corresponding to a periodic configuration or a dynamic configuration.

In some embodiments, in a case where the first cell transmits the SIB aperiodically, the first cell may not transmit the SIB, may transmit the SIB based on an on-demand mechanism, or may transmit the SIB in response to a request from the terminal.

Transmitting the SIB based on the on-demand mechanism includes but is not limited to at least one of:
the cell transmitting the SIBs according to its own requirements, for example, when the cell needs to establish downlink synchronization or perform downlink connection reestablishment, it is deemed that a requirement is generated, and thus the cell may actively broadcast the SIB; or
the cell transmitting the SIB according to a requirement of the terminal, for example, when the terminal needs to acquire the SIB, the terminal may send a request to the network device. Accordingly, the network device learns that the terminal needs to acquire the SIB, and then determines whether to broadcast the SIB.

In some embodiments, the terminal may send the request for the SIB by transmitting a WUS to the cell that transmits the SIB aperiodically.

In some embodiments, the first network device of the first cell periodically broadcasts an MIB.

In some embodiments, the first network device of the first cell determines the MIB of the first cell according to whether the first cell periodically transmits the SIB.

In some embodiments, the first network device of the first cell determines the MIB of the first cell according to whether the first cell periodically transmits the SIB1.

In some embodiments, determining, by the first network device of the first cell, the MIB of the first cell according to whether the first cell periodically transmits the SIB includes but is not limited to at least one of:
determining a check mode of the MIB according to whether the first cell periodically transmits the SIB;
determining, according to whether the first cell periodically transmits the SIB, whether the MIB of the first cell includes a first bit; or
determining, according to whether the first cell periodically transmits the SIB, an indication content of a second bit included in the MIB.

In some embodiments, the MIB of the first cell explicitly indicates whether the first cell periodically transmits the SIB. Exemplarily, the MIB of the first cell includes an indication bit for indicating whether the first cell periodically transmits the SIB. For example, the MIB of the first cell explicitly indicates whether the first cell periodically transmits the SIB1.

In some embodiments, the MIB of the first cell implicitly indicates whether the first cell periodically transmits the SIB. For example, when the first cell transmits the SIB aperiodically, the MIB may include a PUCCH resource for scheduling information (for example, DCI) of the SIB1. As another example, when the first cell periodically transmits the SIB, the MIB does not include the PUCCH resource for scheduling information (for example, DCI) of the SIB1. As a further example, the MIB of the first cell implicitly indicates whether the first cell periodically transmits the SIB1.

In some embodiments, whether the first cell periodically transmits the SIB is determined according to the check mode of the MIB.

For example, in a case where the first cell periodically transmits the SIB, the MIB of the first cell adopts a first check mode. In a case where the first cell transmits the SIB aperiodically, the MIB of the first cell adopts a second check mode. In this case, in a case where the terminal successfully verifies the MIB of the first cell by adopting the first check mode, it is determined that the first cell periodically transmits the SIB; otherwise, it is determined that the first cell transmits the SIB aperiodically. Alternatively, in a case where the terminal successfully verifies the MIB of the first cell by adopting the second check mode, it is determined that the first cell transmits the SIB aperiodically; otherwise, it is determined that the first cell periodically transmits the SIB.

In some embodiments, whether the first cell periodically transmits the SIB is determined according to a check algorithm adopted by the MIB. For example, different check algorithms may correspond to different polynomials for generating a CRC.

In some embodiments, whether the first cell periodically transmits the SIB is determined according to a check mask adopted by the MIB.

Taking CRC as an example, the check mask may be a CRC mask. For example, an information bit of the MIB is XORed with a bit sequence generated based on a polynomial to obtain a CRC with a specified length. The CRC with the specified length is then XORed with the check mask and appended to an end of the MIB, and the network device transmits an entire content to the terminal.

In some embodiments, whether the first cell periodically transmits the SIB is determined according to whether the MIB includes a first bit.

For example, an unused idle bit and/or a reserved bit in the MIB may be used as the first bit. A quantity of the first bit may be one or more. Different values of the first bit respectively indicate whether the first cell periodically transmits the SIB.

Whether the first cell periodically transmits the SIB is determined according to an indication content of a second bit included in the MIB.

In some embodiments, a newly added bit or an occupied idle bit in the MIB may be used as the second bit. A quantity of the second bit may be one or more. The indication content of the second bit corresponds to a value of the second bit. Whether the first cell periodically transmits the SIB is determined according to the indication content of the second bit.

In some embodiments, the second network device of the second cell transmits the cell configuration of the first cell. Exemplarily, the cell configuration is configured for a terminal to determine whether the first cell periodically transmits the SIB. For example, the cell configuration is at least configured for the terminal to determine whether the first cell periodically transmits the SIB1.

In some embodiments, the cell configuration includes at least one of:
first information indicating whether the first cell periodically transmits the SIB;
second information indicating whether the first cell transmits the SIB based on an on-demand mechanism; or
third information configured for the terminal to send the first request to the first cell and/or to send a second request to the second cell, in which the first request and/or the second request are configured for the terminal to request the SIB from the first cell.

In some embodiments, when the cell configuration includes the first information, the second information may be omitted from the cell configuration.

In some embodiments, when the cell configuration includes the second information, the first information may be omitted from the cell configuration.

In some embodiments, when the cell configuration includes the third information, both the first information and the second information may be omitted from the cell configuration. For example, the cell configuration is equivalent to configuring the terminal to request the SIB of the first cell via the first request.

In some embodiments, the third information includes at least one of:
a sending mode of the first request, for example, the sending mode includes a one-time transmission and/or a repeated transmission; or
time domain position information of a receiving time window.

In some embodiments, in a case where the third information does not include the time domain position information of the receiving time window, the sending mode of the first request is defaulted to the one-time transmission, and indication information of the sending mode may be omitted accordingly.

In a case where the terminal recovers from a coverage hole, the terminal determines the manner of acquiring the SIB of the first cell according to whether the first cell periodically transmits the SIB.

In some embodiments, the coverage hole herein may refer to an area without a network coverage.

In a case where the terminal receives a system broadcast change indication of the first cell, the terminal determines the manner of acquiring the SIB of the first cell according to whether the first cell periodically transmits the SIB.

In some embodiments, in a case where the terminal receives the system broadcast change indication of the first cell, it is indicated that the first cell updates the SIB. For example, the system broadcast change indication of the first cell may indicate whether SIB1 and/or SIBn are updated, where n is a positive integer greater than or equal to 2. In a case where SIB1 is updated, the terminal needs to acquire the SIB1 of the first cell. In a case where SIBn is updated, the terminal needs to acquire the SIB1 of the first cell and obtain a resource configuration of the SIBn according to the SIB1.

In a case where the terminal has a positioning requirement, the terminal determines the manner of acquiring the SIB of the first cell according to whether the first cell periodically transmits the SIB.

Exemplarily, when the terminal has a satellite positioning requirement, the terminal needs to acquire the SIB related to positioning. For example, the positioning requirement of the terminal means that the terminal needs to acquire SIB9 carrying timing information of a satellite positioning system. To acquire the SIB9, the terminal needs to obtain configuration information of the SIB9 based on the SIB1.

In a case where the terminal receives paging DCI of the first cell which indicates SI update, the terminal determines the manner of acquiring the SIB of the first cell according to whether the first cell periodically transmits the SIB.

In some embodiments, in a case where the paging DCI received by the terminal indicates the SI update, it means that the SIB is updated. Similarly, to properly camp on or access the first cell, the terminal needs to acquire the updated SIB, and thus needs to determine the manner of acquiring the SIB of the first cell.

In a case where a validity period of the SIB of the first cell stored by the terminal expires, the terminal determines the manner of acquiring the SIB of the first cell according to whether the first cell periodically transmits the SIB.

In some embodiments, the SIB of the first cell has a certain validity period. In a case where the validity period expires, the terminal may fail to confirm whether the SIB is still valid, so the terminal needs to re-acquire the SIB of the first cell and accordingly determine the manner of acquiring the SIB of the first cell.

At S2202, the terminal determines whether a first cell periodically transmits an SIB.

In some embodiments, the terminal determines, according to the MIB of the first cell and/or the cell configuration, whether the first cell periodically transmits the SIB.

In some embodiments, the terminal determines, according to the MIB of the first cell and/or the cell configuration, whether the first cell periodically transmits the SIB within a current time period.

At S2203, the terminal determines a manner of acquiring the SIB of the first cell.

In some embodiments, the terminal determines the manner of acquiring the SIB of the first cell according to whether the first cell periodically transmits the SIB.

In some embodiments, in a case where the first cell periodically transmits the SIB, the terminal receives the SIB from the first cell at a corresponding moment according to a period for the first cell to transmit the SIB.

In some embodiments, in a case where the first cell transmits the SIB aperiodically, the terminal determines the manner of acquiring the SIB of the first cell according to a cell type of the first cell.

In some embodiments, in a case where the first cell transmits the SIB aperiodically and the first cell is the first-type cell that transmits the SIB on demand, the terminal determines to acquire the SIB from the first cell based on request information.

In some embodiments, in a case where the first cell transmits the SIB aperiodically and the first cell is the second-type cell that does not transmit the SIB, the terminal determines to acquire the SIB of the first cell from a reference cell (also referred to as an anchor cell) of the first cell.

In some embodiments, in a case where the terminal has a cell reselection requirement, the terminal determines the manner of acquiring the SIB of the first cell according to whether the first cell periodically transmits the SIB.

At S2204, the terminal sends a second request to the second cell.

In some embodiments, the second cell may be a current cell of the terminal. For example, the second cell may be a cell where the terminal currently camps.

In some embodiments, the second cell may be a conventional cell at a current location of the terminal. The conventional cell may be a cell that periodically transmits the SSB and/or the SIB.

In some embodiments, in a case the determined manner of acquiring the SIB of the first cell is to acquire the SIB by sending the second request to the second cell, the terminal sends the second request to the second cell.

Exemplarily, in a case where the first cell is a cell that transmits the SIB in response to a request from the terminal, the terminal sends the second request to the second cell.

Exemplarily, in a case where the first cell is a cell that transmits the SIB on demand, the terminal sends the second request to the second cell.

Exemplarily, in a case where the first cell transmits the SIB in response to a request from the terminal or transmits the SIB on demand and the cell configuration specifies acquiring the SIB of the first cell via the second request, the terminal sends the second request to the second cell.

In some embodiments, the terminal sends the second request to the second cell before accessing or camping on the first cell.

In some embodiments, the terminal sends an RRC message, a MAC message or uplink control information (UCI) carrying the second request to the second cell.

At S2205, the first cell and/or the second cell transmit a request response.

In some embodiments, the request response may include the SIB requested by the terminal and transmitted by the first cell.

In some embodiments, the request response may be an RRC message indicating to transmit the SIB requested by the terminal.

In some embodiments, the request response may be an RRC message indicating the SIB to be broadcast.

In some embodiments, the request response may indicate whether to transmit the SIB requested by the terminal. In a case where the request response indicates that the first cell and/or the second cell will transmit the SIB requested by the terminal, the terminal monitors the SIB transmitted by the first cell and/or the second cell.

In some embodiments, the request response may further carry resource location information for the first cell and/or the second cell to transmit the SIB requested by the terminal, so that the terminal monitors the SIB at a resource position indicated by the resource location information, for example, monitors SIB1.

In some embodiments, the second request includes at least one of:
a cell ID of the first cell; or
identification information of the requested SIB.

In some embodiments, the second request may include the identification information of the requested SIB. For example, the SIB requested by the terminal may be SIB1.

In some embodiments, the identification information of the SIB may be omitted from the second request. For example, the SIB requested by the terminal before reselecting to the first cell is defaulted to a designated SIB. The designated SIB includes but is not limited to SIB1.

In some embodiments, the cell ID includes but is not limited to a physical cell ID and/or a higher-layer cell ID.

At S2206, the terminal determines whether the network device detects the second request.

In some embodiments, the terminal monitors the request response corresponding to the second request within a receiving time window after sending the second request. In a case where the request response is detected within the time window, it is determined that the network side detects the second request; otherwise, it is deemed that no request response is detected by the terminal.

In some embodiments, the terminal determines whether the network side receives the second request according to whether the SIB requested by the terminal is received from the network side. For example, in a case where the terminal detects the SIB requested by the terminal transmitted by the first network device, it is determined that the network side receives the second request; otherwise, it is deemed that the network side does not receive the second request.

In some embodiments, the terminal determines whether the network side receives the second request according to whether the request response for the second request is received. For example, in a case where the terminal receives the request response transmitted by the first network device, it is determined that the network side receives the second request; otherwise, it is deemed that the network side does not receive the second request.

At S2207, the terminal retransmits the second request to the second cell.

In some embodiments, the terminal retransmits the second request to the second cell until a transmission count of the second request reaches a maximum count.

In some embodiments, when determining that the network device detects the second request, the terminal stops sending the second request to the second cell regardless of whether the network side transmits the SIB requested by the terminal.

In some embodiments, in a case where the terminal has urgent service data to transmit, the terminal may choose to access or camp on another cell that periodically transmits the SSB and/or the SIB.

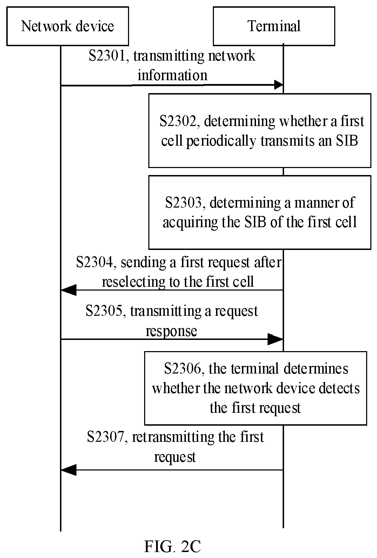

As shown in FIG. 2C, an embodiment of the disclosure provides a method for requesting an SIB, which is performed by a communication system. The method may include the following steps.

At S2301, a network device transmits network information to a terminal.

In some embodiments, the network device may be an access network device.

In some embodiments, the network device that transmits the network information may be a first network device and/or a second network device, where the second network device is different from the first network device. Exemplarily, the first network device and the second network device may be two adjacently arranged access network devices.

The first network device is a network device of a first cell, and the second network device may be a network device of a second cell.

The first cell and the second cell may be neighboring cells. Exemplarily, the first cell and the second cell may be intra-frequency neighboring cells or inter-frequency neighboring cells.

The first cell and the second cell may be cells with an overlapping coverage area.

For a carrier aggregation and/or dual connectivity scenario, the second cell may be a primary cell of the first cell while the first cell is a secondary cell. Alternatively, the first cell is a conventional secondary cell, and the second cell may be a primary secondary cell.

In some embodiments, the second cell may be a current cell of the terminal. Exemplarily, when the terminal is in an RRC connected state, the second cell may be a current serving cell of the terminal. As another example, when the terminal is in an RRC idle state and/or an RRC inactive state, the second cell may be a current camping cell of the terminal.

In some embodiments, the network device transmits the network information in a broadcast manner, a unicast manner or a multicast manner.

In some embodiments, the network information may be an MIB of the first cell.

In some embodiments, the network information may be a cell configuration of the first cell.

In some embodiments, the network information is configured for the terminal to determine whether the first cell periodically transmits an SIB.

In some embodiments, the network information is configured for the terminal to determine whether the first cell periodically transmits an SIB1.

In some embodiments, periodically transmitting the SIB may include: transmitting the SIB according to a semi-statically configured period, and/or transmitting the SIB according to a period corresponding to a periodic configuration or a dynamic configuration.

In some embodiments, in a case where the first cell transmits the SIB aperiodically, the first cell may not transmit the SIB, may transmit the SIB based on an on-demand mechanism, or may transmit the SIB in response to a request from the terminal.

Transmitting the SIB based on the on-demand mechanism includes but is not limited to at least one of:
the cell transmitting the SIBs according to its own requirements, for example, when the cell needs to establish downlink synchronization or perform downlink connection reestablishment, it is deemed that a requirement is generated, and thus the cell may actively broadcast the SIB; or
the cell transmitting the SIB according to a requirement of the terminal, for example, when the terminal needs to acquire the SIB, the terminal may send a request to the network device. Accordingly, the network device learns that the terminal needs to acquire the SIB, and then determines whether to broadcast the SIB.

In some embodiments, the terminal may send the request for the SIB by transmitting a WUS to the cell that transmits the SIB aperiodically.

In some embodiments, the first network device of the first cell periodically broadcasts an MIB.

In some embodiments, the first network device of the first cell determines the MIB of the first cell according to whether the first cell periodically transmits the SIB.

In some embodiments, the first network device of the first cell determines the MIB of the first cell according to whether the first cell periodically transmits the SIB1.

In some embodiments, determining, by the first network device of the first cell, the MIB of the first cell according to whether the first cell periodically transmits the SIB includes but is not limited to at least one of:
determining a check mode of the MIB according to whether the first cell periodically transmits the SIB;
determining, according to whether the first cell periodically transmits the SIB, whether the MIB of the first cell includes a first bit; or
determining, according to whether the first cell periodically transmits the SIB, an indication content of a second bit included in the MIB.

In some embodiments, the MIB of the first cell explicitly indicates whether the first cell periodically transmits the SIB. Exemplarily, the MIB of the first cell includes an indication bit for indicating whether the first cell periodically transmits the SIB. For example, the MIB of the first cell explicitly indicates whether the first cell periodically transmits the SIB1.

In some embodiments, the MIB of the first cell implicitly indicates whether the first cell periodically transmits the SIB. For example, when the first cell transmits the SIB aperiodically, the MIB may include a PUCCH resource for scheduling information (for example, DCI) of the SIB1. As another example, when the first cell periodically transmits the SIB, the MIB does not include the PUCCH resource for scheduling information (for example, DCI) of the SIB1. As a further example, the MIB of the first cell implicitly indicates whether the first cell periodically transmits the SIB1.

In some embodiments, whether the first cell periodically transmits the SIB is determined according to the check mode of the MIB.

For example, in a case where the first cell periodically transmits the SIB, the MIB of the first cell adopts a first check mode. In a case where the first cell transmits the SIB aperiodically, the MIB of the first cell adopts a second check mode. In this case, in a case where the terminal successfully verifies the MIB of the first cell by adopting the first check mode, it is determined that the first cell periodically transmits the SIB; otherwise, it is determined that the first cell transmits the SIB aperiodically. Alternatively, in a case where the terminal successfully verifies the MIB of the first cell by adopting the second check mode, it is determined that the first cell transmits the SIB aperiodically; otherwise, it is determined that the first cell periodically transmits the SIB.

In some embodiments, whether the first cell periodically transmits the SIB is determined according to a check algorithm adopted by the MIB. For example, different check algorithms may correspond to different polynomials for generating a CRC.

In some embodiments, whether the first cell periodically transmits the SIB is determined according to a check mask adopted by the MIB.

Taking CRC as an example, the check mask may be a CRC mask. For example, an information bit of the MIB is XORed with a bit sequence generated based on a polynomial to obtain a CRC with a specified length. The CRC with the specified length is then XORed with the check mask and appended to an end of the MIB, and the network device transmits an entire content to the terminal.

In some embodiments, whether the first cell periodically transmits the SIB is determined according to whether the MIB includes a first bit.

For example, an unused idle bit and/or a reserved bit in the MIB may be used as the first bit. A quantity of the first bit may be one or more. Different values of the first bit respectively indicate whether the first cell periodically transmits the SIB.

Whether the first cell periodically transmits the SIB is determined according to an indication content of a second bit included in the MIB.

In some embodiments, a newly added bit or an occupied idle bit in the MIB may be used as the second bit. A quantity of the second bit may be one or more. The indication content of the second bit corresponds to a value of the second bit. Whether the first cell periodically transmits the SIB is determined according to the indication content of the second bit.

In some embodiments, the second network device of the second cell transmits the cell configuration of the first cell. Exemplarily, the cell configuration is configured for a terminal to determine whether the first cell periodically transmits the SIB. For example, the cell configuration is at least configured for the terminal to determine whether the first cell periodically transmits the SIB1.

In some embodiments, the cell configuration includes at least one of:
first information indicating whether the first cell periodically transmits the SIB;
second information indicating whether the first cell transmits the SIB based on an on-demand mechanism; or
third information configured for the terminal to send the first request to the first cell and/or to send a second request to the second cell, in which the first request and/or the second request are configured for the terminal to request the SIB from the first cell.

In some embodiments, when the cell configuration includes the first information, the second information may be omitted from the cell configuration.

In some embodiments, when the cell configuration includes the second information, the first information may be omitted from the cell configuration.

In some embodiments, when the cell configuration includes the third information, both the first information and the second information may be omitted from the cell configuration. For example, the cell configuration is equivalent to configuring the terminal to request the SIB of the first cell via the first request.

In some embodiments, the third information includes at least one of:
a sending mode of the first request, for example, the sending mode includes a one-time transmission and/or a repeated transmission; or
time domain position information of a receiving time window.

In some embodiments, in a case where the third information does not include the time domain position information of the receiving time window, the sending mode of the first request is defaulted to the one-time transmission, and indication information of the sending mode may be omitted accordingly.

In a case where the terminal recovers from a coverage hole, the terminal determines the manner of acquiring the SIB of the first cell according to whether the first cell periodically transmits the SIB.

In some embodiments, the coverage hole herein may refer to an area without a network coverage.

In a case where the terminal receives a system broadcast change indication of the first cell, the terminal determines the manner of acquiring the SIB of the first cell according to whether the first cell periodically transmits the SIB.

In some embodiments, in a case where the terminal receives the system broadcast change indication of the first cell, it is indicated that the first cell updates the SIB. For example, the system broadcast change indication of the first cell may indicate whether SIB1 and/or SIBn are updated, where n is a positive integer greater than or equal to 2. In a case where SIB1 is updated, the terminal needs to acquire the SIB1 of the first cell. In a case where SIBn is updated, the terminal needs to acquire the SIB1 of the first cell and obtain a resource configuration of the SIBn according to the SIB1.

In a case where the terminal has a positioning requirement, the terminal determines the manner of acquiring the SIB of the first cell according to whether the first cell periodically transmits the SIB.

Exemplarily, when the terminal has a satellite positioning requirement, the terminal needs to acquire the SIB related to positioning. For example, the positioning requirement of the terminal means that the terminal needs to acquire SIB9 carrying timing information of a satellite positioning system. To acquire the SIB9, the terminal needs to obtain configuration information of the SIB9 based on the SIB1.

In a case where the terminal receives paging DCI of the first cell which indicates SI update, the terminal determines the manner of acquiring the SIB of the first cell according to whether the first cell periodically transmits the SIB.

In some embodiments, in a case where the paging DCI received by the terminal indicates the SI update, it means that the SIB is updated. Similarly, to properly camp on or access the first cell, the terminal needs to acquire the updated SIB, and thus needs to determine the manner of acquiring the SIB of the first cell.

In a case where a validity period of the SIB of the first cell stored by the terminal expires, the terminal determines the manner of acquiring the SIB of the first cell according to whether the first cell periodically transmits the SIB.

In some embodiments, the SIB of the first cell has a certain validity period. In a case where the validity period expires, the terminal may fail to confirm whether the SIB is still valid, so the terminal needs to re-acquire the SIB of the first cell and accordingly determine the manner of acquiring the SIB of the first cell.

At S2302, the terminal determines whether a first cell periodically transmits an SIB.

In some embodiments, the terminal determines, according to the MIB of the first cell and/or the cell configuration, whether the first cell periodically transmits the SIB.

In some embodiments, the terminal determines, according to the MIB of the first cell and/or the cell configuration, whether the first cell periodically transmits the SIB within a current time period.

At S2303, the terminal determines a manner of acquiring the SIB of the first cell.

In some embodiments, the terminal determines the manner of acquiring the SIB of the first cell according to whether the first cell periodically transmits the SIB.

In some embodiments, in a case where the first cell periodically transmits the SIB, the terminal receives the SIB from the first cell at a corresponding moment according to a period for the first cell to transmit the SIB.

In some embodiments, in a case where the first cell transmits the SIB aperiodically, the terminal determines the manner of acquiring the SIB of the first cell according to a cell type of the first cell.

In some embodiments, in a case where the first cell transmits the SIB aperiodically and the first cell is the first-type cell that transmits the SIB on demand, the terminal determines to acquire the SIB from the first cell based on request information.

In some embodiments, in a case where the first cell transmits the SIB aperiodically and the first cell is the second-type cell that does not transmit the SIB, the terminal determines to acquire the SIB of the first cell from a reference cell (also referred to as an anchor cell) of the first cell.

In some embodiments, in a case where the terminal has a cell reselection requirement, the terminal determines the manner of acquiring the SIB of the first cell according to whether the first cell periodically transmits the SIB.

Exemplarily, in a case where the terminal has the cell reselection requirement and the first cell transmits the SIB aperiodically, the terminal determines to send the first request for requesting the SIB of the first cell to the first cell.

For example, in a case where the terminal has the cell reselection requirement and the first cell transmits the SIB aperiodically, the terminal determines to send the first request for requesting the SIB of the first cell to the first cell before reselecting to the first cell.

The first request sent to the first cell before reselecting to the first cell is configured to request the SIB.

For example, the terminal sends the first request to the first cell during a cell reselection process.

In some embodiments, the first request may include identification information of the requested SIB. For example, the SIB requested by the terminal may be SIB1. In some embodiments, the identification information of the SIB may be omitted from the first request. For example, the SIB requested by the terminal before reselecting to the first cell is defaulted to a designated SIB. The designated SIB includes but is not limited to SIB1.

In some embodiments, the first request further includes a cell ID of the first cell. It should be noted that the cell ID of the first cell is optional content in a case where the terminal sends the first request to the first cell. For example, in a case where the terminal sends the first request on a resource position for sending the first request of the first cell, the first request may not carry the cell ID of the first cell.

In some embodiments, the terminal may request the SIB from the first cell based on an Msg1 of a four-step random access procedure.

In some embodiments, the terminal may request the SIB from the first cell based on an Msg3 of a four-step random access procedure.

In some embodiments, the terminal may request the SIB from the first cell based on an MsgA of a two-step random access procedure.

In some embodiments, when the terminal has the cell reselection requirement and the first cell transmits the SIB aperiodically, the terminal determines to send the first request for requesting the SIB of the first cell to the first cell after reselecting to the first cell.

As another example, when the terminal has the cell reselection requirement and the first cell transmits the SIB aperiodically, the terminal determines to send a second request for requesting the SIB of the first cell to the second cell.

In some embodiments, the network device may reserve a specific RAP. When the terminal sends a random access message carrying the specific RAP, it is deemed that the terminal sends a request for the SIB to the network device.

In some embodiments, there are multiple specific RAPs. For example, there are correspondences between different specific RAPs and different SIBs. In this way, the terminal selects, according to the correspondences and the SIB to be requested, a corresponding specific RAP to send the random access message.

At S2304, the terminal sends a first request to the first cell.

In some embodiments, in a case where the determined manner of acquiring the SIB of the first cell is to acquire the SIB by sending the first request to the first cell, the terminal sends the first request to the first cell.

Exemplarily, in a case where the first cell is a cell that transmits the SIB in response to a request from the terminal, the terminal sends the first request to the first cell.

Exemplarily, in a case where the first cell is a cell that transmits the SIB on demand, the terminal sends the first request to the first cell.

Exemplarily, in a case where the first cell transmits the SIB in response to a request from the terminal or transmits the SIB on demand and the cell configuration specifies acquiring the SIB of the first cell via the first request, the terminal sends the first request to the first cell.

In some embodiments, when the terminal has the cell reselection requirement and the first cell transmits the SIB aperiodically, the terminal determines to send the first request for requesting the SIB of the first cell to the first cell after reselecting to the first cell.

For example, in a case where the terminal detects the MIB or completes downlink synchronization with the first cell, it may be deemed that the terminal has reselected to the first cell.

The terminal may send the request for the SIB to the first cell after reselecting to the first cell.

The first request includes but is not limited to requesting the SIB from the first cell during a process of the terminal establishing a connection with the first cell.

In some embodiments, the terminal sends the first request to the first cell after accessing or camping on the first cell.

At S2305, the first cell transmits a request response.

In some embodiments, the request response may include the SIB requested by the terminal and transmitted by the first cell.

In some embodiments, the request response may be an RRC message indicating to transmit the SIB requested by the terminal.

In some embodiments, the request response may be an RRC message indicating the SIB to be broadcast.

In some embodiments, the request response may indicate whether to transmit the SIB requested by the terminal. In a case where the request response indicates that the first cell and/or the second cell will transmit the SIB requested by the terminal, the terminal monitors the SIB transmitted by the first cell and/or the second cell.

In some embodiments, the request response may further carry resource location information for the first cell and/or the second cell to transmit the SIB requested by the terminal, so that the terminal monitors the SIB at a resource position indicated by the resource location information, for example, monitors SIB1.

At S2306, the terminal determines whether the network device detects the first request.

In some embodiments, the terminal monitors the request response corresponding to the first request within a receiving time window after sending the first request. In a case where the request response is detected within the time window, it is determined that the network device detects the first request; otherwise, it is deemed that no request response is detected by the terminal.

In some embodiments, the terminal determines whether the network side receives the first request according to whether the SIB requested by the terminal is received from the network side. For example, in a case where the terminal detects the SIB requested by the terminal transmitted by the first network device, it is determined that the network side receives the first request; otherwise, it is deemed that the network side does not receive the first request.

In some embodiments, the terminal determines whether the network side receives the first request according to whether the request response for the first request is received. For example, in a case where the terminal receives the request response transmitted by the first network device, it is determined that the network side receives the first request; otherwise, it is deemed that the network side does not receive the first request.

At S2307, the terminal continues to send the first request to the first cell.

In some embodiments, the terminal retransmits the first request when determining that the network device does not detect the first request.

In some embodiments, when determining that the network device does not detect the first request, the terminal increases a transmission power and retransmits the first request, until a transmission count of the first request reaches a maximum count or the transmission power of the first request reaches a maximum transmission power.

In some embodiments, in a case where it is determined that the network device detects the first request, the terminal stops sending the first request to the network device regardless of whether the network side transmits the SIB requested by the terminal.

In some embodiments, in a case where the terminal has urgent service data to transmit, the terminal may choose to access or camp on another cell that periodically transmits the SSB and/or the SIB.

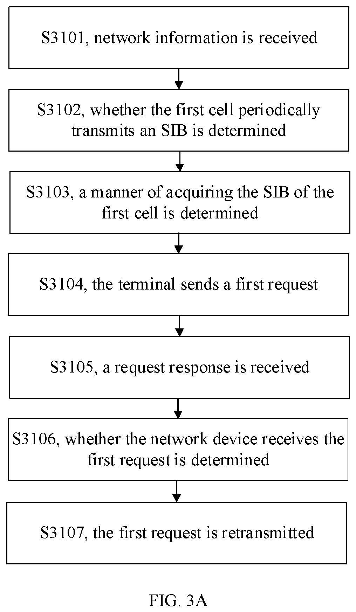

As shown in FIG. 3A, an embodiment of the disclosure provides a method for requesting an SIB, which may be performed by a terminal. The method may include the following steps.

At S3101, network information is received.

In some embodiments, the terminal receives an MIB of a first cell.

In some embodiments, the terminal receives a cell configuration of the first cell. Exemplarily, the terminal receives the cell configuration of the first cell at a second cell.

For relevant descriptions of the network information in embodiments of the disclosure, reference may be made to embodiments corresponding to FIG. 2A.

At S3102, whether the first cell periodically transmits an SIB is determined.

In some embodiments, the terminal determines whether the first cell periodically transmits SIB1 according to the received network information.

In some embodiments, for optional steps of S3102, reference may be made to any embodiment of S2102 corresponding to FIG. 2A.

At S3103, a manner of acquiring the SIB of the first cell is determined.

In some embodiments, the terminal determines the manner of acquiring the SIB of the first cell according to a determined result.

In some embodiments, for implementations of S3103, reference may be made to any embodiment of S2103 corresponding to FIG. 2A.

At S3104, the terminal sends a first request.

In some embodiments, in a case where the terminal determines that the network side transmits the SIB in response to a request from the terminal, the terminal sends the first request to the first cell.

In some embodiments, the terminal sends the first request to the first cell before accessing or camping on the first cell.

In some embodiments, the terminal sends the first request to the first cell after accessing or camping on the first cell.

In some embodiments, for implementations of S3104, reference may be made to any embodiment of S2104 in FIG. 2A.

In some embodiments, for implementations of S3104, reference may be made to any embodiment of S2304 corresponding to FIG. 2C.

At S3105, a request response is received.

In some embodiments, the terminal receives a request response transmitted by the first cell.

In some embodiments, the terminal receives a request response transmitted by the second cell.

In some embodiments, the terminal receives a request response transmitted by the network side within a receiving time window after sending the first request.

In some embodiments, for implementations of S3105, reference may be made to any embodiment of S2105 in FIG. 2A.

In some embodiments, for implementations of S3105, reference may be made to any embodiment of S2305 corresponding to FIG. 2C.

At S3106, whether the network device receives the first request is determined.

In some embodiments, the terminal determines whether the network device receives the first request according to a receiving result of the request response.

In some embodiments, for implementations of S3106, reference may be made to any embodiment of S2106 in FIG. 2A.

In some embodiments, for implementations of S3106, reference may be made to any embodiment of S2306 corresponding to FIG. 2C.

At S3107, the first request is retransmitted.

In some embodiments, in a case where it is determined that the network device does not receive the first request, the terminal retransmits the first request.

In some embodiments, in a case where it is determined that the network device does not detect the first request, the terminal retransmits the first request.

In some embodiments, in a case where it is determined that the network device does not detect the first request, the terminal increases a transmission power and retransmits the first request, until a transmission count of the first request reaches a maximum count or the transmission power of the first request reaches a maximum transmission power.

In some embodiments, in a case where it is determined that the network device detects the first request, the terminal stops sending the first request to the network device regardless of whether the network side transmits the SIB requested by the terminal.

In some embodiments, in a case where the terminal has urgent service data to transmit, the terminal may choose to access or camp on another cell that periodically transmits the SSB and/or the SIB.

In some embodiments, for implementations of S3107, reference may be made to any embodiment of S2107 in FIG. 2A.

In some embodiments, for implementations of S3107, reference may be made to any embodiment of S2307 corresponding to FIG. 2C.

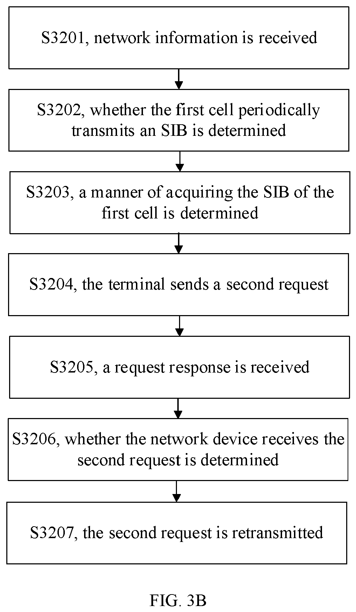

As shown in FIG. 3B, an embodiment of the disclosure provides a method for requesting an SIB, which may be performed by a terminal. The method may include the following steps.

At S3201, network information is received.

In some embodiments, the terminal receives an MIB of a first cell.

In some embodiments, the terminal receives a cell configuration of the first cell. Exemplarily, the terminal receives the cell configuration of the first cell at a second cell.

For relevant descriptions of the network information in embodiments of the disclosure, reference may be made to embodiments corresponding to FIG. 2B.

At S3202, whether the first cell periodically transmits an SIB is determined.

In some embodiments, the terminal determines whether the first cell periodically transmits SIB1 according to the received network information.

In some embodiments, for optional steps of S3202, reference may be made to any embodiment of S2202 corresponding to FIG. 2B.

At S3203, a manner of acquiring the SIB of the first cell is determined.

In some embodiments, the terminal determines the manner of acquiring the SIB of the first cell according to a determined result.

In some embodiments, for implementations of S3203, reference may be made to any embodiment of S2203 corresponding to FIG. 2B.

At S3204, the terminal sends a second request.

In some embodiments, the terminal sends the second request to the second cell.

In some embodiments, in a case where the terminal determines that the network side transmits the SIB in response to a request from the terminal, the terminal sends the second request to the second cell.

In some embodiments, the terminal sends the second request to the second cell before accessing or camping on the first cell.

In some embodiments, the terminal sends the second request to the second cell after accessing or camping on the first cell.

In some embodiments, for implementations of S3204, reference may be made to any embodiment of S2204 in FIG. 2B.

At S3205, a request response is received.

In some embodiments, the terminal receives a request response transmitted by the first cell.

In some embodiments, the terminal receives a request response transmitted by the second cell.

In some embodiments, the terminal receives a request response transmitted by the network side within a receiving time window after sending the second request.

In some embodiments, for implementations of S3205, reference may be made to any embodiment of S2205 in FIG. 2B.

At S3206, whether the network device receives the second request is determined.

In some embodiments, the terminal determines whether the network device receives the second request according to a receiving result of the request response.

In some embodiments, for implementations of S3206, reference may be made to any embodiment of S2206 in FIG. 2B.

At S3207, the second request is retransmitted.

In some embodiments, in a case where it is determined that the network device does not receive the second request, the terminal retransmits the second request.

In some embodiments, in a case where it is determined that the network device does not detect the second request, the terminal retransmits the second request.

In some embodiments, in a case where it is determined that the network device does not detect the second request, the terminal increases a transmission power and retransmits the second request, until a transmission count of the second request reaches a maximum count or the transmission power of the second request reaches a maximum transmission power.

In some embodiments, in a case where it is determined that the network device detects the second request, the terminal stops sending the second request to the network device regardless of whether the network side transmits the SIB requested by the terminal.

In some embodiments, in a case where the terminal has urgent service data to transmit, the terminal may choose to access or camp on another cell that periodically transmits the SSB and/or the SIB.

In some embodiments, for implementations of S3207, reference may be made to any embodiment of S2207 in FIG. 2B.

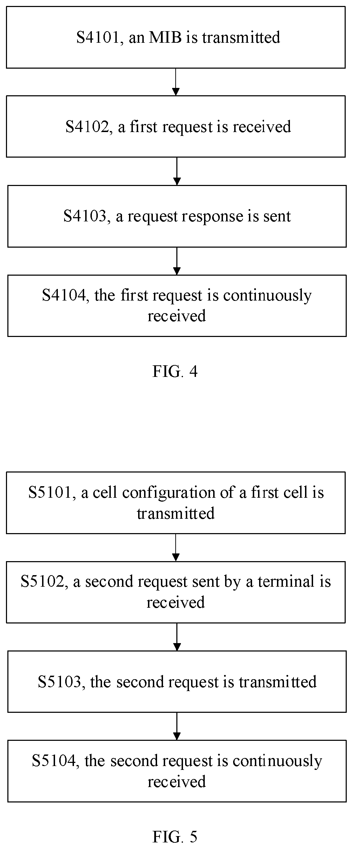

As shown in FIG. 4, an embodiment of the disclosure provides a method for requesting an SIB, which may be performed by a first network device of a first cell. The method may include the following steps.

At S4101, an MIB is transmitted.

In some embodiments, a check mode of the MIB is determined according to whether the first cell periodically transmits an SIB. Exemplarily, a check algorithm of the MIB is determined according to whether the first cell periodically transmits an SIB. As another example, a check mask of the MIB is determined according to whether the first cell periodically transmits an SIB.

In some embodiments, whether the MIB includes a first bit is determined according to whether the first cell periodically transmits an SIB.

In some embodiments, indication content of a second bit included in the MIB is determined according to whether the first cell periodically transmits an SIB.

For optional implementations of S4101 in embodiments of the disclosure, reference may be made to the corresponding embodiments in FIG. 2A to FIG. 2C.

At S4102, a first request is received.

In some embodiments, the first request is configured for a terminal to request an SIB of the first cell.

In some embodiments, the first request may be a request message sent from the terminal before accessing or camping on the first cell.

In some embodiments, the first request may be a request message sent from the terminal after accessing or camping on the first cell.

In some embodiments, the first request includes a random access request.

In some embodiments, the random access request includes a first random access preamble indicating a request for the SIB.

For relevant descriptions of the first request, reference may be made to the corresponding embodiments in FIG. 2A and/or FIG. 2C.

At S4103, a request response is sent.

In some embodiments, the request response is configured for a terminal to determine whether the first network device has received the first request.

In some embodiments, the request response includes a random access response.

In some embodiments, the random access response indicates to the terminal that the first network device has received the random access request for the SIB.

In some embodiments, the request response is transmitted within a receiving time window after the first request is received.

For optional implementations of S4103, reference may be made to any optional embodiment of S2105 in FIG. 2A.

For optional implementations of S4103, reference may be made to any optional embodiment of S2305 in FIG. 2C.

At S4104, the first request is continuously received.

In some embodiments, the first request received continuously may be the first request with an increased transmission power.

For relevant descriptions of the first request received continuously, reference may be made to any optional embodiment of S2107 in FIG. 2A.

For relevant descriptions of the first request received continuously, reference may be made to any optional embodiment of S2307 in FIG. 2C.

It should be noted that:
In some embodiments, S4103 and S4104 are optional steps. In a case where the first cell determines not to respond to the request from the terminal, the first cell may skip transmitting the request response and/or continuously receiving the first request.

In some embodiments, S4101 is an optional step. For example, the MIB of the first cell may be transmitted by the first cell or a second cell. In a case where the MIB of the first cell is transmitted by the second cell, or in a case where the terminal determines whether the first cell periodically transmits an SIB according to a cell configuration of the first cell transmitted by the second cell, S4101 may be omitted.

In some embodiments, S4104 is an optional step. For example, the terminal may not continue to send the first request. In a case where the cell configuration does not configure the terminal to retransmit the first request, the second network device does not need to continuously receive the first request.

As shown in FIG. 5, an embodiment of the disclosure provides a method for requesting an SIB, which is performed by a second network device of a second cell. The method includes the following steps.

At S5101, a cell configuration of a first cell is transmitted.

In some embodiments, the cell configuration includes at least one of the following:
first information indicating whether the first cell periodically transmits an SIB;
second information indicating whether the first cell transmits the SIB based on an on-demand mechanism;
third information configured for the terminal to send a first request to the first cell and/or send a second request to the second cell, in which the first request and/or the second request are configured for the terminal to request the SIB from the first cell.

In some embodiments, in a case where the cell configuration includes the first information, the second information may be omitted from the cell configuration.

In some embodiments, in a case where the cell configuration includes the second information, the first information may be omitted from the cell configuration.

In some embodiments, in a case where the cell configuration includes the third information, both the first information and the second information may be omitted from the cell configuration. For example, the cell configuration is equivalent to configuring the terminal to request the SIB of the first cell via the first request and/or the second request.

For relevant descriptions of the cell configuration, reference may be made to the corresponding embodiments in FIG. 2A to FIG. 2C.

In some embodiments, S5101 is an optional step. For example, the cell configuration of the first cell may be transmitted by the first cell or another cell. In a case where the terminal determines whether the first cell periodically transmits an SIB according to the MIB of the first cell, the second network device of the second cell does not need to transmit the cell configuration of the first cell.

In other embodiments, S5101 may be executed independently. For example, the second cell transmits the cell configuration of the first cell to the terminal, while the terminal sends a request for the SIB directly to the first cell rather than the second cell.

At S5102, a second request sent from a terminal is received.

The second request is configured for the terminal to request the first cell to transmit the SIB.

In some embodiments, the second request includes at least one of the following:
a cell ID of the first cell;
identification information of the requested SIB.

In some embodiments, the second request may include identification information of the requested SIB. For example, the SIB requested by the terminal may be SIB1.

In some embodiments, the identification information of the SIB may be omitted from the second request. For example, the SIB requested by the terminal before reselecting to the first cell is defaulted to a designated SIB. The designated SIB includes but is not limited to SIB1.

In some embodiments, the cell ID includes but is not limited to a physical cell ID and/or a higher-layer cell ID.

For optional implementations of S5102, reference may be made to any optional embodiment of S2305 in FIG. 2C.

In some embodiments, the second network device receives the second request sent from the terminal in a case where the terminal has a cell reselection requirement.

At S5103, the second request is transmitted.

In some embodiments, the second request is transmitted to the first cell.

For example, the second request is transmitted to the first cell based on an interface and/or a tunnel between the first cell and the second cell.

In some embodiments, in a case where the second network device transmits the SIB in place of the first cell, the second network device may transmit the SIB of the first cell to the terminal, and the second network device does not need to transmit the second request to the first cell at this time.

In some embodiments, in a case where the second network device is a cell that does not transmit the SIB, the second network device may forward the second request to another cell that transmits the SIB in place of the first cell.

At S5104, the second request is continuously received.

In some embodiments, S5104 is an optional step. For example, the terminal may not continue to send the second request. In a case where the cell configuration does not configure the terminal to retransmit the second request, the second network device does not need to continuously receive the second request.

Embodiments of the disclosure provide a procedure for requesting SIB1 in the RRC-IDLE/INACTIVE state, so that the network side is not required to periodically transmit SIB1, and further network energy saving gains are achieved.

Solution 1: SIB1 request for a target cell initiated based on cell reselection. Specifically, this solution includes sending an SIB1 request to the target cell before cell reselection, to trigger the target cell to transmit SIB1 to the terminal after the terminal reselects to the target cell. The target cell corresponds to the aforementioned first cell.

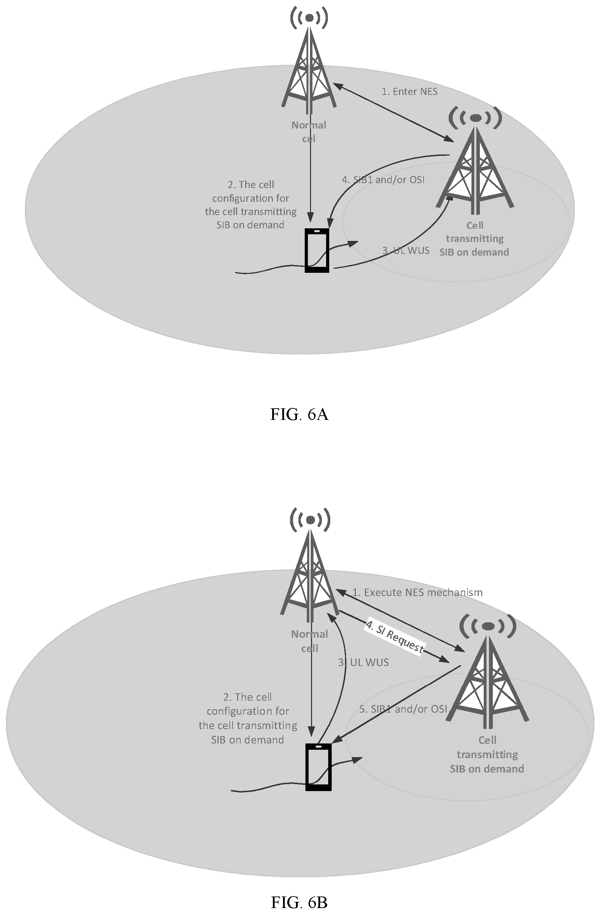

As shown in FIG. 6A, an embodiment of the disclosure provides a method, which includes the following steps.

Step 1: A cell performs state transition and starts to execute a NES mechanism.

Step 2: The terminal receives, in a normal cell, a cell configuration for the cell transmitting SIB1 on demand.

Step 3: The terminal transmits an uplink (UL) WUS to the target cell. The terminal evaluates cell reselection and determines the target cell for cell reselection. In a case where the target cell is not transmitting SIB1, the terminal initiates an SIB1 request procedure for the target cell, for example, by transmitting a WUS. The WUS may be implemented by transmitting a random access preamble. The random access preamble may be a preamble reserved by the system. Transmission of the random access preamble indicates a request for SIB 1, or a request for SIB and OSI.

Step 4: The terminal monitors SIB1 and/or OSI transmitted by the target cell.

The terminal monitors a system information radio network temporary identifier (SI-RNTI) on the target cell to receive SIB1. In a case where SIB1 is not received within the transmission period of SIB1, the terminal continues to increase a transmission power and retransmit the WUS. The above procedure is repeated until the terminal receives SIB1, or the uplink transmission power of the terminal reaches the maximum uplink transmission power allowed by the cell, or a transmission count of the random access preamble reaches the maximum transmission count. The terminal notifies a higher layer of a failure of the SIB1 request.

Before Step 1 and Step 2, the terminal receives a system broadcast from the current cell. The system broadcast includes configuration information of neighboring cells, including at least one of the following: configuration information for transmitting the UL WUS, a common cell configuration, and indication information of an SIB broadcast state. The configuration is associated with a neighboring cell ID (such as a physical cell identifier (PCI) and a frequency).

Before Step 1, Step 2 and Step 3, the current cell and neighboring cells exchange the indication information of the SIB1 broadcast state.

Before initiating the UL WUS to request SIB1, the terminal first confirms the SIB 1 broadcast state of the target cell. In a case where the target cell is not in an SIB1 broadcast state, the terminal requests SIB1.

Further, the terminal may acquire the indication of the SIB1 broadcast state (i.e., whether in the broadcast state) by receiving the MIB of the target cell.

The MIB is configured to indicate the SIB1 broadcast state. For an SSB transmitted on a cell-defining SSB (CD-SSB) or a synchronization raster, the following options are provided:
Option 1: The ssb-SubcarrierOffset field in the MIB indicates that RMSI is not contained and SIB1 can be requested. For example, a value of ssb-SubcarrierOffset is set to 30 for FR1, or set to 14 for FR2. Option 2: Spare bits in the MIB may also indicate that no SIB1 is available but SIB1 can be requested.
Option 3: A separate CRC for the MIB is specified. This CRC is different from a conventional CRC, and indicates that no SIB1 is available but SIB1 can be requested. The new CRC can be obtained by calculation based on the original CRC. For example, a value of the new CRC is equal to the original CRC plus 1.
Option 4: At least two CRC masks are defined. One CRC mask indicates that no SIB 1 is available but SIB1 can be requested. Another CRC mask indicates that SIB1 is not transmitted at all. A third CRC mask may also be defined to indicate that SIB1 is transmitted.
Option 5: Indication information is carried in the MIB to indicate that no SIB1 is available but SIB1 can be requested, no SIB is available, or SIB is available.

Solution 2: SIB1 request for a target cell initiated based on cell reselection. An SIB 1 request is sent to the current cell before cell reselection.

As shown in FIG. 6B, an embodiment of the disclosure provides a method, which includes the following steps.

Step 1: A cell performs state transition and starts to execute the NES mechanism.

Step 2: The terminal receives, in a normal cell, a cell configuration of the cell transmitting SIB1 on demand.

Step 3: The terminal transmits an UL WUS to the current cell. The terminal evaluates cell reselection and determines the target cell for cell reselection. In a case where the target cell is not transmitting SIB1, the terminal initiates an SIB1 request procedure for the target cell, for example, by transmitting a WUS. The WUS may be implemented by transmitting a random access preamble. The random access preamble may be a preamble reserved by the system. Transmission of the random access preamble indicates a request for SIB1, or a request for SIB and OSI.

Step 4: The current cell transmits an SI request to the target cell.

Step 5: The target cell transmits SIB1 and/or OSI.

The terminal evaluates cell reselection and determines the target cell for cell reselection. In a case where the target cell is not transmitting SIB1, the terminal initiates an SIB 1 request procedure to the current cell.

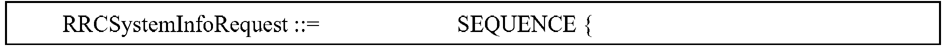

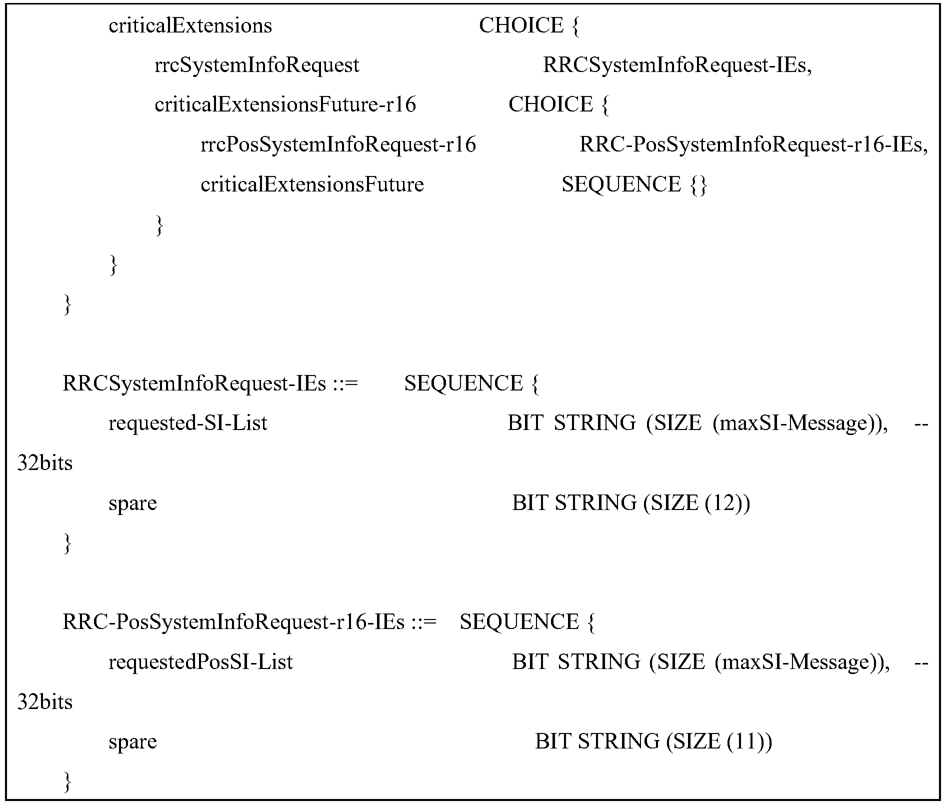

For example, the terminal sends an RRCSystemInfoRequest signaling to the current cell. The signaling carries a cell ID for requesting SIB1, and/or indication information for requesting SIB1. Meanwhile, the signaling may further carry an indication for requesting OSI and/or indication information for SIBx.

After receiving the above indications, the current cell forwards the SIB1 request indication, and/or the OSI request indication, and/or the SIBx indication information to the target cell. SIBx refers to a per-SIB request.

The terminal monitors the SI-RNTI on the target cell to receive SIB1.

Before Step 1 and Step 2, the terminal receives a system broadcast from the current cell. The system broadcast includes configuration information of neighboring cells, including at least one of the following: a common cell configuration, indication information of an SIB broadcast state and the like. The configuration is associated with a neighboring cell ID, such as a PCI and a frequency.

Before Step 1, Step 2 and Step 3, the current cell and neighboring cells exchange the indication information of the SIB1 broadcast state.

Before initiating a request for SIB1, the terminal first confirms the SIB1 broadcast state of the target cell. In a case where the target cell is not in an SIB1 broadcast state, the terminal requests SIB1.

Further, the terminal may acquire the indication of the SIB1 broadcast state (that is, whether in the broadcast state) by receiving the MIB of the target cell.

The MIB is configured to indicate the SIB1 broadcast state. For an SSB transmitted on a CD-SSB or a synchronization raster, the following options are provided:
Option 1: The ssb-SubcarrierOffset field in the MIB indicates that RMSI is not contained and SIB1 can be requested. For example, a value of ssb-SubcarrierOffset is set to 30 for FR1, or set to 14 for FR2. Option 2: Spare bits in the MIB may also indicate that no SIB1 is available but SIB1 can be requested.
Option 3: A separate CRC for the MIB is specified. This CRC is different from a conventional CRC, and indicates that no SIB1 is available but SIB1 can be requested. The new CRC can be obtained by calculation based on the original CRC. For example, a value of the new CRC is equal to the original CRC plus 1.
Option 4: At least two CRC masks are defined. One CRC mask indicates that no SIB 1 is available but SIB1 can be requested. Another CRC mask indicates that SIB1 is not transmitted at all. A third CRC mask may also be defined to indicate that SIB1 is transmitted.
Option 5: Indication information is carried in the MIB to indicate that no SIB1 is available but SIB1 can be requested, no SIB is available, or SIB is available.

### Solution 3: SIB1 request for a target cell initiated based on cell reselection ->SIB1 request sent to the current cell after cell reselection

As shown in FIG. 6C, an embodiment of the disclosure provides a method, which includes the following steps:
Step 1: A cell performs state transition and starts to execute the NES mechanism.
Step 2: The terminal receives, in a normal cell, a cell configuration of the cell transmitting SIB1 on demand.
Step 3: The terminal transmits an UL WUS to the target cell after reselecting to the target cell. The terminal evaluates cell reselection and determines the target cell for cell reselection. In a case where the target cell is not transmitting SIB1, the terminal initiates an SIB1 request procedure for the target cell, for example, by transmitting a WUS. The WUS may be implemented by transmitting a random access preamble. The random access preamble may be a preamble reserved by the system. Transmission of the random access preamble indicates a request for SIB 1, or a request for SIB and OSI.
Step 4: The target cell transmits SIB1 and/or OSI.

The terminal evaluates cell reselection and determines the target cell for cell reselection, and then performs cell reselection. In a case where the target cell is not transmitting SIB1:
Option a: The terminal initiates an SIB1 request procedure for the target cell, for example, by transmitting a WUS. The WUS may be implemented by transmitting a random access preamble.

The random access preamble may be a preamble reserved by the system. Transmission of the random access preamble indicates a request for SIB 1, or a request for SIB and OSI.

Option b: The terminal initiates an SIB1 request procedure for the current cell.

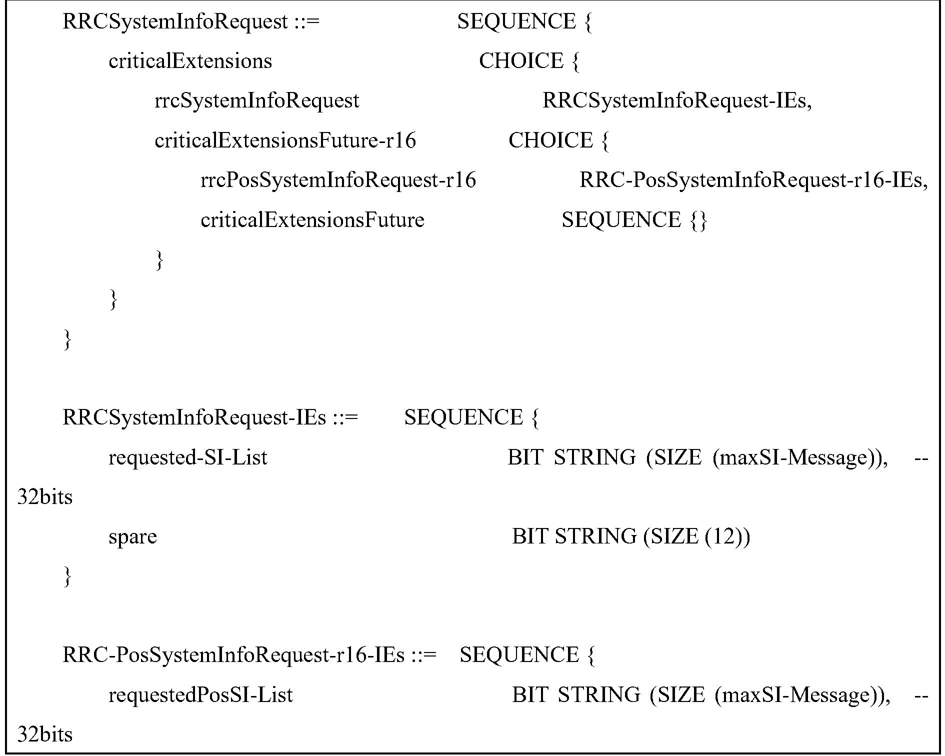

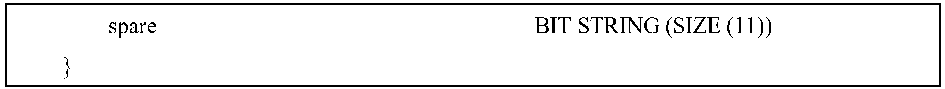

For example, the terminal sends an RRCSystemInfoRequest signaling to the current cell, and the signaling carries indication information for requesting SIB1.

The subsequent processing is as follows:
Option a-1: The terminal monitors the SI-RNTI on the target cell to receive SIB1. In a case where SIB1 is not received within the transmission period of SIB1, the terminal continues to increase a transmission power and retransmit the WUS. The above procedure is repeated until the terminal receives SIB1, or the uplink transmission power of the terminal reaches the maximum uplink transmission power, or the uplink transmission power reaches the maximum uplink transmission power allowed by the cell, or a transmission count of the random access preamble reaches the maximum transmission count. Then the terminal notifies a higher layer of a failure of the SIB1 request.
Option a-2: The random access procedure is deemed successfully completed in a case where the terminal receives a subheader containing the RAP ID corresponding to the random access preamble transmitted by itself. Otherwise, the terminal keeps increasing the transmission power and retransmitting the random access preamble. After the procedure succeeds, the terminal notifies the higher layer that an SI request acknowledgement is received.
Option b-1: The terminal monitors the SI-RNTI on the target cell to receive SIB1.

Before Step 1 and Step 2, the terminal receives a system broadcast from the current cell. The system broadcast includes configuration information of neighboring cells, including at least one of the following: configuration information for transmitting the UL WUS, a common cell configuration, and indication information of an SIB broadcast state. The configuration is associated with a neighboring cell ID, such as a PCI and a frequency.

Before Step 1, Step 2 and Step 3, the current cell and neighboring cells exchange the indication information of the SIB1 broadcast state.

Before initiating the UL WUS to request SIB1, the terminal first confirms the SIB 1 broadcast state of the target cell. In a case where the target cell is not in an SIB1 broadcast state, the terminal requests SIB1. Further, the terminal may obtain the indication of the SIB1 broadcast state (i.e., whether in the broadcast state) by receiving the MIB of the target cell.

The MIB is configured to indicate the SIB1 broadcast state. For an SSB transmitted on a CD-SSB or a synchronization raster, the following options are provided:

Option 1: The ssb-SubcarrierOffset field in the MIB indicates that RMSI is not included and SIB1 can be requested.

For example, the value of ssb-SubcarrierOffset is set to 30 for FR1, or set to 14 for FR2.

Option 2: Spare bits in the MIB may also indicate that no SIB1 is available but SIB 1 can be requested.

Option 3: A separate CRC for the MIB is specified. This CRC is different from a conventional CRC and indicates that no SIB1 is available but SIB1 can be requested. The new CRC can be obtained by calculation based on the original CRC. For example, a value of the new CRC is equal to the original CRC plus 1.

Option 4: At least two CRC masks are defined. One CRC mask indicates that no SIB 1 is available but SIB1 can be requested. Another CRC mask indicates that SIB1 is not transmitted at all. A third CRC mask may also be defined to indicate that SIB1 is transmitted.

Option 5: Indication information is carried in the MIB, to indicate that no SIB1 is available but SIB1 can be requested, no SIB is available, or SIB is available.

Solution 4: Triggering the terminal to request SIB1 after recovering from a coverage hole

The terminal may also initiate the SIB1 request procedure triggered by the following factors or events:
the terminal recovers from a coverage hole;
the terminal receives a system broadcast change indication;
the terminal receives a systemInfoModification indication or an etwsAndCmasIndication for a public alert notification from paging DCI;
a positioning request from a higher layer;
three hours have elapsed since the terminal last stored valid SIB1.

To support the above SIB1 request procedure for the current serving cell, the current serving cell shall also configure configuration information for requesting SIB1 in system broadcast, for example, a dedicated random access preamble for the UL WUS.

Embodiments of the disclosure provide the procedure for requesting SIB1 in the RRC-IDLE/INACTIVE state, so that the network side is not required to periodically transmit SIB1, and further network energy saving gains are achieved.

In embodiments of the disclosure, part or all of the steps and optional implementations thereof may be combined arbitrarily with part or all of the steps in other embodiments, and may also be combined arbitrarily with optional implementations of other embodiments.

In embodiments of the disclosure, part or all of the steps and optional implementations thereof may be combined arbitrarily with part or all of the steps in other embodiments, and may also be combined arbitrarily with optional implementations of other embodiments.

Embodiments of the disclosure further provide an apparatus for implementing any one of the above methods. For example, an apparatus is provided, where the apparatus includes units or modules configured to execute each step performed by the terminal in any one of the above methods. As another example, another apparatus is provided, which includes units or modules configured to execute each step performed by a network device (such as an access network device or a core network device) in any one of the above methods.

It should be understood that the division of each unit or module in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the disclosure, the processor is a circuit with signal processing capability. In an implementation, the processor may be a circuit with instruction reading and running capability, such as a CPU, a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an ASIC or a PLD, such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

As shown in FIG. 7A, an embodiment of the disclosure provides a terminal. The terminal includes:
a processing module 5101, configured to determine, according to whether a first cell periodically transmits an SIB, a manner of acquiring the SIB of the first cell.

In some embodiments, the terminal may further include a transmitting module and/or a receiving module.

In some embodiments, the transmitting module and/or the receiving module may correspond to a network interface and/or a transceiving antenna of the terminal.

In some embodiments, the processing module is configured to enable the terminal to perform steps related to information processing in any method for requesting the SIB.

In some embodiments, the transmitting module is configured to enable the terminal to perform steps related to information transmission in any method for requesting the SIB.

In some embodiments, the receiving module is configured to enable the terminal to perform steps related to information reception in any method for requesting the SIB.

In some embodiments, the processing module is configured to, in a case where a first condition is met, determine, according to whether the first cell periodically transmits the SIB, the manner of acquiring the SIB of the first cell, in which the first condition includes at least one of:
the terminal having a cell reselection requirement;
the terminal recovering from a coverage hole;
the terminal receiving a system broadcast change indication of the first cell;
the terminal having a positioning requirement;
DCI of the first cell indicating SI; or
a validity period of the SIB of the first cell stored by the terminal expiring.

In some embodiments, the processing module is configured to perform at least one of:
in a case where the terminal has a cell reselection requirement and the first cell transmits the SIB aperiodically, determining to send a first request to the first cell, the first request being configured for requesting the SIB of the first cell; or
in a case where the terminal has a cell reselection requirement and the first cell transmits the SIB aperiodically, determining to send a second request to a second cell, the second request being configured for requesting the SIB of the first cell.

In some embodiments, the processing module is configured to perform at least one of:
in a case where the terminal has the cell reselection requirement and the first cell transmits the SIB aperiodically, determining to send the first request to the first cell before reselecting to the first cell; or
in a case where the terminal has the cell reselection requirement and the first cell transmits the SIB aperiodically, determining to send the first request to the first cell after reselecting to the first cell.

In some embodiments, the processing module is configured to perform:
in a case where the terminal has the cell reselection requirement and the first cell transmits the SIB aperiodically, determining to send a random access request to the first cell, the random access request including a first random access preamble (RAP) indicating a request for the SIB.

In some embodiments, the receiving module is configured to receive a RAR sent from a first network device of the first cell; and
the processing module is configured to determine whether the first network device receives the first request according to the RAR.

In some embodiments, the transmitting module is configured to monitor the requested SIB on the first cell according to a configuration for periodically transmitting the SIB; and
the processing module is configured to determine whether the first network device receives the first request according to whether the requested SIB is monitored.

In some embodiments, the processing module is configured to, in response to determining that the first network device does not receive the first request, determine to increase a transmission power of the random access request and continue sending the random access request.

In some embodiments, the processing module is configured to determine to stop sending the random access request in a case where the transmission power of the random access request reaches a maximum transmission power and/or in a case where a transmission count of the first RAP reaches a maximum transmission count.

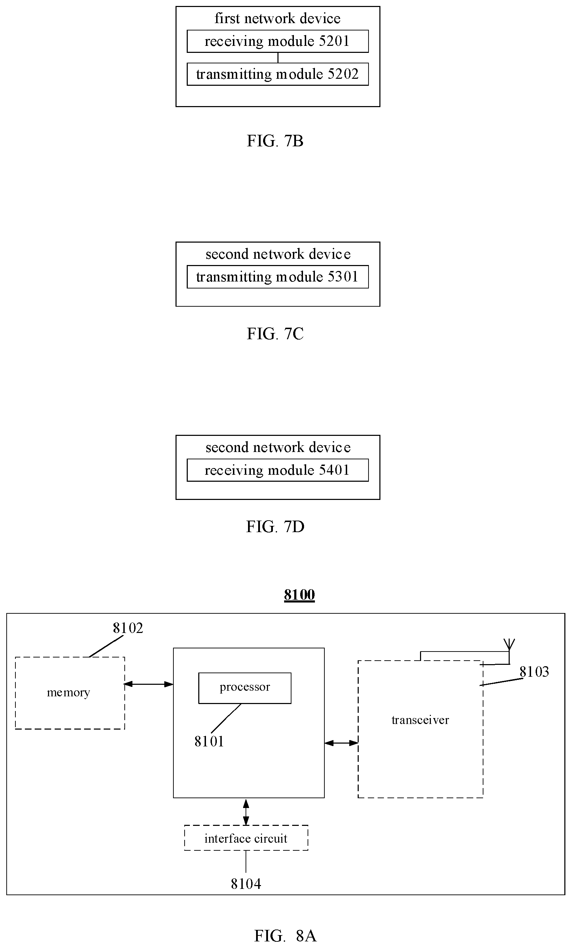

FIG. 7B shows a first network device provided in an embodiment of the disclosure. The device includes:
a receiving module 5201, configured to a first request sent from a terminal, in which the first request is configured for the terminal to request an SIB of the first cell; and
a transmitting module 5202, configured to transmit the SIB requested by the terminal according to the first request.

In some embodiments, the network device may further include a processing module.

In some embodiments, the transmitting module and/or the receiving module may correspond to a network interface and/or a transceiving antenna of the first network device.

In some embodiments, the processing module is configured to perform any steps related to information processing in the SIB requesting method executed by the first network device.

In some embodiments, the first request includes a random access request.

The random access request includes a first random access preamble indicating a request for the SIB.

In some embodiments, the transmitting module is configured to transmit a request response to the terminal, in which the request response is configured for the terminal to determine whether the first network device receives the first request.

In some embodiments, the request response includes a RAR.

The RAR indicates to the terminal that the first network device receives the random access request for the SIB.

In some embodiments, the first request is a request sent from the terminal before reselecting to the first cell; or the first request is a request sent from the terminal after reselecting to the first cell.

In some embodiments, the processing module is configured to perform at least one of:
determining, according to whether the first cell periodically transmits the SIB, a check mode of an MIB;
determining, according to whether the first cell periodically transmits the SIB, whether the MIB of the first cell includes a first bit; or
determining, according to whether the first cell periodically transmits the SIB, an indication content of a second bit included in the MIB of the first cell.

In some embodiments, the processing module is configured to perform at least one of:
determining, according to whether the first cell periodically transmits the SIB, a check algorithm of the MIB; or
determining, according to whether the first cell periodically transmits the SIB, a check mask of the MIB.

As shown in FIG. 7C, an embodiment of the disclosure provides a second network device. The second network device includes:
a transmitting module 5301, configured to transmit a cell configuration of a first cell to a terminal. The cell configuration is at least configured for the terminal to determine whether the first cell periodically transmits an SIB.

In some embodiments, the cell configuration includes at least one of:
first information indicating whether the first cell periodically transmits the SIB;
second information indicating whether the first cell transmits the SIB based on an on-demand mechanism;
third information configured for the terminal to send a first request to the first cell and/or to send a second request to the second cell, in which the first request and/or the second request are configured for the terminal to request the SIB from the first cell.

As shown in FIG. 7D, an embodiment of the disclosure provides another second network device. The device includes:
a receiving module 5401, configured to receive a second request sent from a terminal in a case where the terminal has a cell reselection requirement, in which the second request is configured for the terminal to request a first cell to transmit an SIB.

In some embodiments, the second network device may further include a transmitting module and/or a receiving module.

In some embodiments, the transmitting module and/or the receiving module may correspond to a network interface and/or a transceiving antenna of the second network device.

In some embodiments, the processing module is configured to enable the second network device to perform steps related to information processing in any method for requesting an SIB.

In some embodiments, the transmitting module is configured to transmit the second request to a first network device of the first cell.

Embodiments of the disclosure further provide a communication device. The communication device may include one or more processors. The processors are configured to invoke instructions to enable the communication device to execute the method for requesting the SIB implemented in any of the foregoing embodiments.

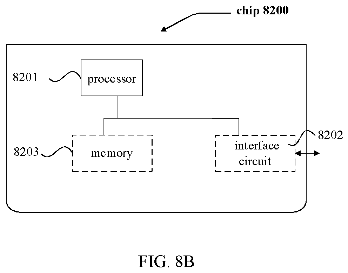

In some embodiments, as shown in FIG. 8A and/or FIG. 8B, the communication device 8100 further includes one or more memories 8102 for storing instructions. In some embodiments, all or part of the memories 8102 may be arranged outside the communication device 8100.

The communication device may be the foregoing terminal or network device. In some embodiments, the network device may be a master node and/or a secondary node.

In some embodiments, the communication device 8100 further includes one or more transceivers 8103. In a case where the communication device 8100 is provided with one or more transceivers 8103, communication steps such as transmission and reception in the foregoing methods are performed by the transceivers 8103, and other steps are performed by the processor 810.

In some embodiments, a transceiver may include a receiver and/or a transmitter, and the receiver and the transmitter may be separate or integrated together. In some embodiments, terms such as transceiver, transceiver unit, transceiver machine, transceiver circuit, interface circuit, and interface may be replaced with each other; terms such as transmitter, transmitting unit, transmitting machine, and transmitting circuit may be replaced with each other; and terms such as receiver, receiving unit, receiving machine, and receiving circuit may be replaced with each other.

In some embodiments, the communication device 8100 may further include one or more interface circuits 8104. The interface circuit 8104 is connected to the memory 8102. The interface circuit 8104 may be configured to receive signals from the memory 8102 or other devices, and transmit signals to the memory 8102 or other devices. For example, the interface circuit 8104 may read instructions stored in the memory 8102 and send the instructions to the processor 8101.

The communication device 8100 described in the above embodiments may be a network device or a terminal. However, the scope of the communication device 8100 defined in the disclosure is not limited thereto, and the structure of the communication device 8100 is not restricted by FIG. 8A. The communication device may be an independent device or a part of a larger device. For example, the communication device may be: (1) an independent integrated circuit (IC), a chip, a system-on-chip or a subsystem; (2) a set of one or more ICs. In some embodiments, the above IC set may further include a storage component for storing data and programs; (3) an application specific integrated circuit (ASIC), such as a modem; (4) a module embedded in other devices; (5) a receiver, a terminal device, an intelligent terminal device, a cellular phone, a wireless device, a handset, a mobile unit, an in-vehicle device, a network device, a cloud device, an artificial intelligence device, and the like; (6) other types of devices.

FIG. 8B is a schematic structural diagram of a chip 8200 provided in an embodiment of the disclosure. In a case where the communication device 8100 is implemented as a chip or a system-on-chip, reference may be made to the structure of the chip 8200 shown in FIG. 8B, which is not limited thereto.

The chip 8200 includes one or more processors 8201. The processor 8201 is configured to invoke instructions to enable the chip 8200 to execute any of the methods for requesting an SIB described above.

In some embodiments, the chip 8200 may further include one or more interface circuits 8202. The interface circuit 8202 is connected to the memory 8203. The interface circuit 8202 may be configured to receive signals from the memory 8203 or other devices, and transmit signals to the memory 8203 or other devices. For example, the interface circuit 8202 may read instructions stored in the memory 8203 and send the instructions to the processor 8201. In some embodiments, terms such as interface circuit, interface, transceiver pin and transceiver may be used interchangeably.

In some embodiments, the chip 8200 may further include one or more memories 8203 for storing instructions. In some embodiments, all or part of the memories 8203 may be arranged outside the chip 8200.

The disclosure further provides a storage medium. The storage medium stores instructions. When the instructions run on the communication device 8100, the communication device 8100 is enabled to execute any of the above methods. In some embodiments, the storage medium is an electronic storage medium. In some embodiments, the storage medium is a computer-readable storage medium, and may also be a storage medium readable by other devices. In some embodiments, the storage medium may be a non-transitory storage medium, and may also be a transitory storage medium.

The disclosure further provides a program product. When the program product is executed by the communication device 8100, the communication device 8100 is enabled to execute any of the above methods for requesting an SIB. In some embodiments, the program product is a computer program product.

The disclosure further provides a computer program. When the computer program runs on a computer, the computer is enabled to execute any of the above methods for requesting an SIB.

Those skilled in the art will readily conceive of other implementations of the embodiments of the disclosure after reviewing the specification and practicing the invention disclosed herein. The disclosure is intended to cover any variations, applications or adaptations of the embodiments of the disclosure. Such variations, applications or adaptations shall comply with the general principles of the embodiments of the disclosure, and may include common general knowledge or conventional technical means in the technical field that are not disclosed herein. The specification and embodiments are merely regarded as illustrative, and the true scope and spirit of the embodiments of the disclosure are set forth in the following claims.

It should be understood that the embodiments of the disclosure are not limited to the specific structures described above and shown in the accompanying drawings, and various modifications and alterations may be made without departing from the scope thereof. The scope of the embodiments of the disclosure is limited only by the appended claims.

## Claims

1. A method for requesting a system information block (SIB), performed by a terminal, comprising:
determining, based on whether a first cell periodically transmits an SIB, a manner of acquiring the SIB of the first cell.

2. The method according to claim 1, wherein determining, based on whether the first cell periodically transmits the SIB, the manner of acquiring the SIB of the first cell comprises:
in a case where a first condition is met, determining, based on whether the first cell periodically transmits the SIB, the manner of acquiring the SIB of the first cell,
wherein the first condition comprises at least one of:
the terminal having a cell reselection requirement;
the terminal recovering from a coverage hole;
the terminal receiving a system broadcast change indication of the first cell;
the terminal having a positioning requirement;
paging downlink control information (DCI) of the first cell indicating system information (SI); or
a validity period of the SIB of the first cell stored by the terminal expiring.

3. The method according to claim 1 or 2, wherein determining, based on whether the first cell periodically transmits the SIB, the manner of acquiring the SIB of the first cell comprises at least one of:
in a case where the terminal has a cell reselection requirement and the first cell transmits the SIB aperiodically, determining to send a first request to the first cell, the first request being configured for requesting the SIB of the first cell; or
in a case where the terminal has a cell reselection requirement and the first cell transmits the SIB aperiodically, determining to send a second request to a second cell, the second request being configured for requesting the SIB of the first cell.

4. The method according to claim 3, wherein determining to send the first request for requesting the SIB of the first cell to the first cell in a case where the terminal has the cell reselection requirement and the first cell transmits the SIB aperiodically comprises at least one of:
in a case where the terminal has the cell reselection requirement and the first cell transmits the SIB aperiodically, determining to send the first request to the first cell before reselecting to the first cell; or
in a case where the terminal has the cell reselection requirement and the first cell transmits the SIB aperiodically, determining to send the first request to the first cell after reselecting to the first cell.

5. The method according to claim 3 or 4, wherein determining to send the first request for requesting the SIB of the first cell to the first cell in a case where the terminal has the cell reselection requirement and the first cell transmits the SIB aperiodically comprises:
in a case where the terminal has the cell reselection requirement and the first cell transmits the SIB aperiodically, determining to send a random access request to the first cell, the random access request comprising a first random access preamble (RAP) indicating a request for the SIB.

6. The method according to claim 5, further comprising:
receiving a random access response (RAR) sent from a first network device of the first cell; and
determining whether the first network device receives the first request based on the RAR.

7. The method according to claim 5, further comprising:
monitoring a requested SIB on the first cell based on a configuration for periodically transmitting the SIB; and
determining whether the first network device receives the first request based on whether the requested SIB is monitored.

8. The method according to any one of claims 5 to 7, further comprising:
in response to determining that the first network device does not receive the first request, determining to increase a transmission power of the random access request and continue sending the random access request.

9. The method according to claim 10, further comprising:
determining to stop sending the random access request in a case where the transmission power of the random access request reaches a maximum transmission power and/or in a case where a transmission count of the first RAP reaches a maximum transmission count.

10. The method according to claim 3, wherein the first request and/or the second request comprises at least one of:
a cell identity (ID) of the first cell; or
identification information of a requested SIB.

11. The method according to any one of claims 1 to 10, further comprising at least one of:
determining, based on a master information block (MIB) of the first cell, whether the first cell periodically transmits the SIB; or
determining, based on a cell configuration of the first cell sent from a second cell, whether the first cell periodically transmits the SIB.

12. The method according to claim 11, wherein determining, based on the MIB of the first cell, whether the first cell periodically transmits the SIB comprises at least one of:
determining, based on whether the MIB of the first cell comprises a first bit, whether the first cell periodically transmits the SIB;
determining, based on a check mode used by the MIB of the first cell, whether the first cell periodically transmits the SIB; or
determining, based on an indication content of a second bit in the MIB of the first cell, whether the first cell periodically transmits the SIB.

13. The method according to claim 12, wherein determining, based on the check mode used by the MIB of the first cell, whether the first cell periodically transmits the SIB comprises at least one of:
determining, based on a check algorithm used by the MIB of the first cell, whether the first cell periodically transmits the SIB; or
determining, based on a check mask used by the MIB of the first cell, whether the first cell periodically transmits the SIB.

14. The method according to claim 11, wherein the cell configuration comprises at least one of:
first information indicating whether the first cell periodically transmits the SIB;
second information indicating whether the first cell transmits the SIB based on an on-demand mechanism; or
third information configured for the terminal to send the first request to the first cell and/or to send a second request to the second cell, wherein the first request and/or the second request are configured for the terminal to request the SIB from the first cell.

15. A method for requesting a system information block (SIB), performed by a first network device of a first cell, comprising:
receiving a first request sent from a terminal, wherein the first request is configured for the terminal to request an SIB of the first cell; and
transmitting the SIB requested by the terminal according to the first request.

16. The method according to claim 15, wherein the first request comprises a random access request, and the random access request comprises a first random access preamble (RAP) indicating a request for the SIB.

17. The method according to claim 16, further comprising:
transmitting a request response to the terminal, wherein the request response is configured for the terminal to determine whether the first network device receives the first request.

18. The method according to claim 17, wherein the request response comprises a random access response (RAR), and the RAR indicates to the terminal that the first network device receives the random access request for the SIB.

19. The method according to any one of claims 15 to 18, wherein the first request is a request sent from the terminal before reselecting to the first cell; or the first request is a request sent from the terminal after reselecting to the first cell.

20. The method according to any one of claims 15 to 19, further comprising at least one of:
determining, according to whether the first cell periodically transmits the SIB, a check mode of a master information block (MIB);
determining, according to whether the first cell periodically transmits the SIB, whether the MIB of the first cell comprises a first bit; or
determining, according to whether the first cell periodically transmits the SIB, an indication content of a second bit comprised in the MIB of the first cell.

21. The method according to claim 20, wherein determining, according to whether the first cell periodically transmits the SIB, the check mode of the MIB comprises at least one of:
determining, according to whether the first cell periodically transmits the SIB, a check algorithm of the MIB; or
determining, according to whether the first cell periodically transmits the SIB, a check mask of the MIB.

22. A method for requesting a system information block (SIB), performed by a second network device of a second cell, comprising:
receiving a second request sent from a terminal in a case where the terminal has a cell reselection requirement, wherein the second request is configured for the terminal to request a first cell to transmit an SIB.

23. The method according to claim 22, further comprising:
transmitting the second request to a first network device of the first cell.

24. A method for requesting a system information block (SIB), performed by a second network device of a second cell, comprising:
transmitting a cell configuration of a first cell to a terminal, wherein the cell configuration is at least configured for the terminal to determine whether the first cell periodically transmits an SIB.

25. The method according to claim 24, wherein the cell configuration comprises at least one of:
first information indicating whether the first cell periodically transmits the SIB;
second information indicating whether the first cell transmits the SIB based on an on-demand mechanism;
third information configured for the terminal to send a first request to the first cell and/or to send a second request to the second cell, wherein the first request and/or the second request are configured for the terminal to request the SIB from the first cell.

26. A terminal, comprising:
a processing module configured to determine, according to whether a first cell periodically transmits a system information block (SIB), a manner of acquiring the SIB of the first cell.

27. A first network device, comprising:
a receiving module configured to receive a first request sent from a terminal, wherein the first request is configured for the terminal to request a system information block (SIB) of the first cell; and
a transmitting module configured to transmit the SIB requested by the terminal according to the first request.

28. A second network device, comprising:
a receiving module configured to receive a second request sent from a terminal in a case where the terminal has a cell reselection requirement, wherein the second request is configured for the terminal to request a first cell to transmit a system information block (SIB).

29. A second network device, comprising:
a transmitting module configured to transmit a cell configuration of a first cell to a terminal, wherein the cell configuration is at least configured for the terminal to determine whether the first cell periodically transmits a system information block (SIB).

30. A communication device, comprising:
one or more processors,
wherein the one or more processors are configured to invoke instructions to cause the communication device to perform the method for requesting a system information block (SIB) according to any one of claims 1 to 14, 15 to 21, 22 to 23 and claims 24 to 25.

31. A computer-readable storage medium storing instructions which, when executed on a communication device, cause the communication device to perform the method for requesting a system information block (SIB) according to any one of claims 1 to 14, 15 to 21, 22 to 23 and claims 24 to 25.
